# EUROPEAN PATENT SPECIFICATION

(11) **EP 0 572 367 B1**
(45) Date of publication and mention of the grant of the patent: **21.04.1999**
(21) Application number: 93850104.6
(22) Date of filing: 14.05.1993
(51) Int. Cl.: H04J 3/07, G06F 5/06

(54) **A method and an arrangement for adapting the rate at which data information is read from a memory to the rate at which data information is written into the memory**
Verfahren und Anordnung zur Anpassung der Geschwindigkeit des Auslesens von Daten aus einem Speicher an die Geschwindigkeit des Einschreibens von Daten in den Speicher
Procédé et dispositif pour adapter la vitesse de lecture des données dans une mémoire à la vitesse de l'écriture des données dans la mémoire

(30) Priority: 27.05.1992 SE 9201672; 25.09.1992 SE 9202774
(43) Date of publication of application: 01.12.1993
(73) Proprietor: TELEFONAKTIEBOLAGET LM ERICSSON, 126 25 Stockholm (SE)
(72) Inventor: Sahl, Stefan, S-126 34 Hägersten (SE); Sydhoff, Per, S-126 57 Hägersten (SE)
(74) Representative: Wideberg, Olle Sven

(56) References cited:
- EP-A- 0 292 208
- EP-A- 0 459 686
- EP-A- 0 475 497
- EP-A- 0 507 385
- WO-A-88/07300
- US-A- 4 884 286
- US-A- 4 941 156
- US-A- 5 052 025

## Description

### TECHNICAL FIELD

The present invention relates to the technical field of memory storage and digital teletransmission. More specifically, the invention relates to a method and an arrangement for adapting the rate at which read addresses are delivered to a memory to the rate at which write addresses are delivered to the same memory, wherein the write addresses are delivered at a rate which is changed intermittently, and wherein the rate at which the read addresses are delivered to the memory is adjusted in a manner such that the read addresses will be delivered to the memory, on average, at the same rate as that at which the write addresses are delivered to the memory. The memory may in particular be used for transmitting data information between synchronous and plesiochronous digital hierarchy systems.

### BACKGROUND ART

In known techniques, different types of phase locking circuits PLL are used to control the memory read-out rate in a manner such that data will be read from the memory at a rate which is as high as the rate at which data is written into the memory.

For instance, in known techniques phase locking circuits are used to control the memory read-out rate when the write-in rate varies as a result of deficiencies in the transmission system. Phase locking circuits are also used to control the read-out rate of data in those instances when writing of data into the memory is repeatedly interrupted. One example of how a phase locking circuit is used is disclosed in U.S. Patent Specification U.S. 4,941,156.

In certain novel types of digital transmission systems, data information is transmitted from a synchronous digital hierarchy system (SDH) to a plesiochronous digital hierarchy system (PDH) via an addressable memory. The data information is divided on frames in the synchronous digital system. These frames include units of data information which are to be transmitted to the PDH-system, and also units of other information which shall not be transmitted. The number of data information units can vary with different frames, as a result of adjustments and justifications made in conjunction with the transmission of data between different SDH-systems. These variations are such as to cause the number of data information units to deviate from a nominal number of data information units in a predetermined manner. When transmitting data information from an SDH-system to a PDH-system, data information is written into an addressable memory, and since the number of data information units may be different in different frames, the information write-in rate is liable to vary. Data information written into the adressable memory is read therefrom into the PDH-system, and when reading data from the memory it is necessary to regulate the read-out rate so that it will be, on average, equally as high as the rate at which information is written into the memory, so that the memory will not become overfilled with data or empty of data. A write counter is used to indicate the address at which data shall be written into the memory, and a read counter is used to indicate the address from which data shall be read from the memory. In practice, the read-out rate is therefore controlled by controlling the rate at which read addresses are generated.

The problem arising with the use of a phase locking circuit to regulate the memory read-out rate when transferring data information from an SDH-system to a PDH-system in accordance with known techniques, is that jitter occurs on the output of the addressable memory. Jitter is caused because the variations in the number of units per frame in the SDH-system is, relatively speaking, so large and occurs so seldomly that the phase locking circuit is unable to regulate the read-out rate, but generates troublesome jitter which is propagated further in the transmission system.

Swedish Patent Application No. 9201672-4 discloses another type of arrangement for regulating the rate at which data is read from an addressable memory, this arrangement having the form of a buffer between an SDH-system and a PDH-system. In addition to the addressable memory, the buffer also includes a write counter which produces write addresses at the rate at which incoming data information enters the memory, and a read counter which produces read addresses from which data shall be read-out from the memory. The write-in rate may vary in response to the amount of datainformation contained in the frames, and the object of this arrangement is to control the read-out rate in a manner to follow the varying write-in rate. For the purpose of controlling data read-out rate, the arrangement includes a mean value counter which is operable to generate mean value addresses around which the write addresses pendulate. The generated mean value addresses thus form the mean values of the generated write addresses. The arrangement includes a first phase detector for comparison between a generated write address and a simultaneously generated mean value address. The generation of mean value addresses is hastened or delayed when the write address deviates excessively from the mean value address as a result of variations in the data write-in rate, so that the write addresses will constantly pendulate around the mean value addresses. The mean value counter utilizes a high frequency clock for generating successive mean value addresses. The frequency of the high frequency clock is higher than the frequency at which the write addresses are generated, so as to enable the generation of a new mean value address to be hastened or delayed in steps. The data read-out rate is regulated by means of a second phase detector, in which each read address gene-rated is compared with the simultaneously generated mean value address, this comparison showing whether or not the data read-out rate is too high. If the read-out rate is too high, the generation of read addresses is stopped temporarily, so that the read-out rate will become as high as the write-in rate.

### DISCLOSURE OF THE INVENTION

A new standard has been formulated in accordance with CCITT in respect of the earlier mentioned transmission systems comprising SDH-systems, PDH-systems and transitions therebetween, for systems which operate at the frequency 155 MHz. The new standard concerning the content of the frames has been designated G.703, G.707-709 and G.781-784 respectively. According to this standard, the frames in the SDH-system contain respectively data information and other information divided in words each consisting generally of eight bits. When transmitting between a SDH-system and a PDH-system, only the datainformation is transmitted, this datainformation being written in words into an addressable memory in which the datainformation is stored intermediately prior to being read-out to the PDH-system. According to specifications in the new standard, the amount of datainformation contained in each frame in the SDH-system may correspond to a nominal number of words, or may contain three words more or three words less than the nominal number of words for each frame. Since the amount of datainformation will thus vary from frame to frame, the rate at which information is written into the memory will also vary.

Thus, in accordance with the aforedescribed new standard, the amount of data information contained in respective frames may vary between the frames. As beforementioned, this is because data information is also transmitted between different SDH-systems and it is necessary to equalize any rate differencies between signals in the various SDH-systems when transmitting data. Differencies in rates in mutually coacting SDH-systems are equalized in accordance with specifications in the new standard. According to this standard, the rates are equalized by adding to a frame or removing therefrom three words of datainformation in a predetermined manner.

When synchronizing the data read-out rate with the varying data write-in rate in accordance with the new standard, it is unsuitable to use a phase locking circuit in accordance with the known technique, since this will amplify the jitter problem. Neither is it possible to use an arrangement according to the aforementioned Swedish Patent Application No. 9201672-4, since the mean value counter of this arrangement operates at a frequency which is higher than the frequency at which incoming data information enters the memory. In the case of an SDH-system which operates in accordance with the new standard, the information contained in the incoming frames enters the addressable memory at a frequency of 155 MHz. However, since no higher frequency that the mean value counter could use is available, an arrangement which includes this mean value counter cannot be used.

The problem of adapting the rate at which data is read from an addressable memory to the varying rate at which information is read into the memory is, of course, not unique to the transmission of information between SDH-systems and PDH-systems, but is also found in other contexts.

An object of the present invention is to provide a method of controlling the rate at which information is read from an addressable memory so that this rate, on average, will be equally as high as the rate at which information is written into the memory, without causing troublesome jitter in the event of momentary changes in the write-in rate.

In simple terms, this object is achieved by the steps of detecting any momentary changes that may occur in the write-in rate, initially masking these detected changes, reducing the masking successively, and regulating or adjusting the read-out rate to the write-in rate, including any masking of changes.

An arrangement according to the present invention may include detecting means for establishing a change in the rate at which the write addresses are delivered to the memory, a first derivating means for deriving a first comparison magnitude from the write addresses and from a first reference address, a second derivating means for deriving a second comparison magnitude from the read addresses and from a second reference address. These comparison magnitudes are delivered to a control means for regulating the read-out rate in accordance with the relationship between the comparison magnitudes. The arrangement also includes activating means for activating the derivation of at least one of the comparison units to a predetermined extent which corresponds to the detected rate change, so as to initially mask the rate change for the control means. The activating means functions to reduce the influence of the derivation successively, so that the control means will adjust the read-out rate incrementally, i.e. stepwise, such that said rate will be equally as high as the data write-in rate.

The inventive embodiments of a method and an arrangement are primarily, but not exclusively, intended for use in conjunction with transitions or transmissions between SDH- and PDH-systems, wherein the addressable memory is included in a buffer between said systems. In the SDH-system, the data information is divided on frames, which include units of data information which is to be transmitted to the PDH-system and also units of other information which is not to be transmitted to the PDH-system. The number of data information units contained in each frame may vary from frame to frame, depending on whether the frame contains a nominal number of datainformation units or more data information units or less data information units than said nominal number.

According to one embodiment of an inventive arrangement, when writing data information into the memory a write address generator may generate a write address for each unit of data information which is to be transmitted to the PDH-system via the memory. These write addresses are generated in cyclic sequences. When reading information from the memory, the read addresses may be generated in cyclic sequences in a read address generator. A phase locking circuit is operative to adjust the read-out rate, by adjusting the rate at which read addresses are generated. According to the invention, a change in the rate at which data information enters the memory is detected. When a rate change is detected, i.e. when the number of data information units in an incoming frame is more or less than the nominal number, a corresponding generation of more or less write addresses is initially masked for the phase locking circuit, so that said circuit will not momentarily change the rate at which the read addresses are generated. This mask is then removed successively, so as to provide the phase locking circuit incrementally with information to the effect that a change in the write-in rate has been detected and so that the phase locking circuit will adjust the rate at which read addresses are generated in a stepwise manner, i.e. incrementally. Consequently, it is not necessary for the phase locking circuit to quickly carry out very large rate changes, therewith avoiding the risk of troublesome jitter.

The prime advantage afforded by the invention is that the read-out rate being adjusted in steps, and therewith prevents the problem of jitter occurring. The arrangement is also relatively simple to implement and costs can be kept low, since the components used are of a conventional kind.

The invention will now be described in more detail with reference to exemplifying embodiments thereof and also with reference to the accompanying drawings.

### BRIEF DESCRIPTION OF THE DRAWINGS

Figure 1 illustrates how datainformation is distributed on frames in the synchronous system and in the plesiochronous system respectively.

Figure 2 illustrates a known technique for writing datainformation into a memory and for reading datainformation therefrom.

Figure 3 illustrates addresses in an addressable memory.

Figure 4 illustrates an inventive arrangement.

Figures 5a-5c illustrate the cyclic generation of write addresses in three different cases.

Figure 6 illustrates cyclic generation of read addresses at varying rates.

Figure 7 illustrates the memory positions with associated addresses in the addressable memory in the inventive arrangement.

Figure 8 illustrates pulses from a first and a second derivating means included in the inventive arrangement.

Figures 9a and 9b illustrate the time shift between pulses delivered by the derivating means.

Figure 10 is a diagram which illustrates variations in a first reference address.

### BEST MODE OF CARRYING OUT THE INVENTION

A preferred embodiment of a method and an arrangement according to the invention uses and includes respectively a memory, a buffer, between a synchronous digital hierarchy system, a so-called SDH-system, and a plesiochronous digital hierarchy system, a so-called PDH-system. The object of the invention is to transmit data information from the SDH-system to the PDH-system via the memory, in a manner such that the rate at which data information is read from the memory will, on average, be equally as high as the rate at which data information is written into the memory.

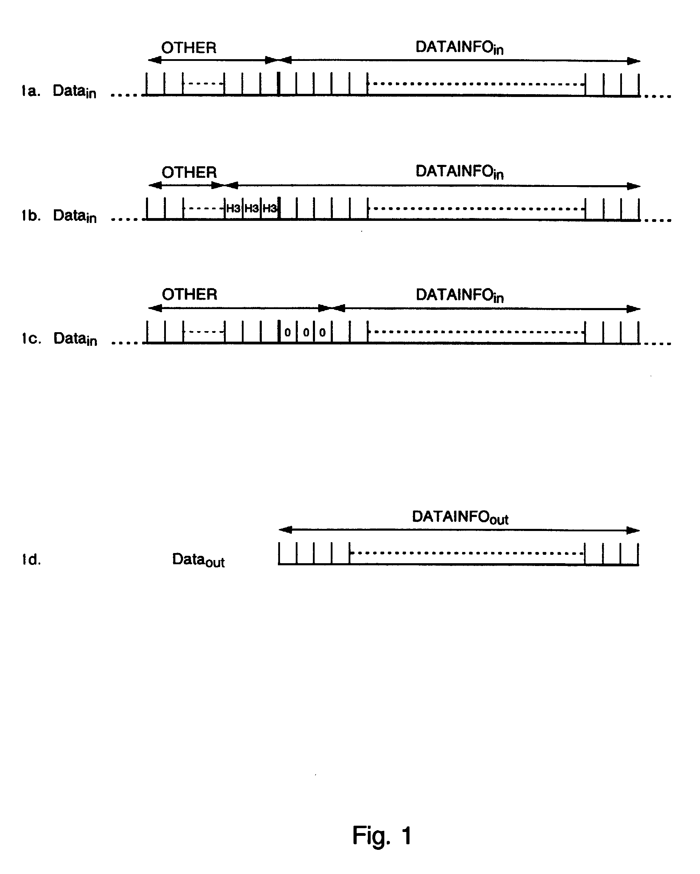

In the synchronous system, data information is divided on frames Dataᵢₙ, as illustrated in Figure 1. The Figure solely shows one part of a frame Dataᵢₙ, a so-called row, although in reality the frame is comprised of a further eight parts, so-called rows, although it is only that part of the frame Dataᵢₙ shown in Figure 1 that has essential significance to the invention. In the following description, the frame part Dataᵢₙ shown in Figure 1 will be treated as though it comprised the whole of the frame, since the remaining information in the frame has no significance with regard to the present invention. The frame Dataᵢₙ in the SDH-system includes units of data information DATAINFOᵢₙ to be transmitted to the PDH-system, and also units of other information OTHER, which is not to be transmitted to the PDH-system. The information in the frames in the SDH-system occur at the frequency of 155 MHz. The data information may, for instance, be comprised of speech signals to be transmitted from one telephone subscriber to another. The other information which is not to be transmitted to the PDH-system may comprise control information, transmission messages and frame reading words, among other things for controlling the transmission of data information between the SDH-system and the PDH-system. The ratio of the number of data information units DATAINFOᵢₙ and the number of other information units OTHER in each frame may vary, dependending on whether or not the frame contains a nominal number of data information units or more or less data information units than the nominal number. The number of data information units DATAINFOᵢₙ in each frame varies in the case of the illustrated embodiment solely in accordance with the earlier described new standard for signals in SDH-systems. One unit in the frame is corresponded by a byte, one word, and a data information byte is transmitted over eight time slots. The information is divided into a total of two hundred and seventy bytes per frame, each byte including eight binary coded bits. In Figure 1a there is shown one frame Dataᵢₙ which contains a nominal number of data information units DATAINFOᵢₙ and a nominal number of units containing other information OTHER. In the illustrated example, the frame includes two hundred and sixty-one bytes of data information and nine bytes of other information. In the case of frames which contain a nominal number of data information units in this way, the datainformation appears in the SDH-system at the nominal frequency of 140 MHz. In practice, other information OTHER may also be incorporated among the data information DATAINFOᵢₙ, although this has been ignored here in order to simplify the description. In Figure lb there is shown a frame in which the number of data information units DATAINFOᵢₙ is greater than the nominal number. In the case of the illustrated embodiment, the frame includes three bytes more data information than is nominal. In accordance with the new standard, the frame includes three spaces H3 which correspond to twenty-four time slots and which are used to transmit three bytes more data information than is nominal. Thus, the frame includes in total two hundred and sixty-four bytes of data information. In the frame illustrated in Figure 1b, the amount of other information OTHER will therewith be smaller than nominal and is corresponded by six bytes instead of nine bytes. In the case of frames which contain more data information units than is nominal in this way, the data information appears at a frequency which is higher than the nominal frequency. In Figure 1c there is shown a frame which contains fewer data information units DATAINFOᵢₙ than is nominal. According to this example, the frame has three bytes less data information than is nominal. In accordance with the new standard, the frame includes three spaces 0 corresponding to twenty-four time slots which are not used to transmit data information. Thus, the frame includes in total two hundred and fifty-eight bytes of data information. The amount of other information OTHER in the frame of Figure 1c will therewith be greater than is nominal and will correspond to twelve bytes instead of nine bytes. In the case of frames which contain fewer data information units than is nominal in this way, the data information appears at a frequency which is lower than the nominal frequency. Thus, the amount of datainformation contained in the frames illustrated in Figures 1a-1c may vary from frame to frame, meaning that the rate at which data information is written into the addressable memory will also vary correspondingly. In Figure 1d there is shown a frame Dataₒᵤₜ which includes data information DATAINFOₒᵤₜ which is read wordwise from the memory to the PDH-system. The frames Dataₒᵤₜ, which solely contain data information, have different sizes in different applications and in different systems. Outgoing data information is read from the memory at a rate which, on average, corresponds to the data write-in rate.

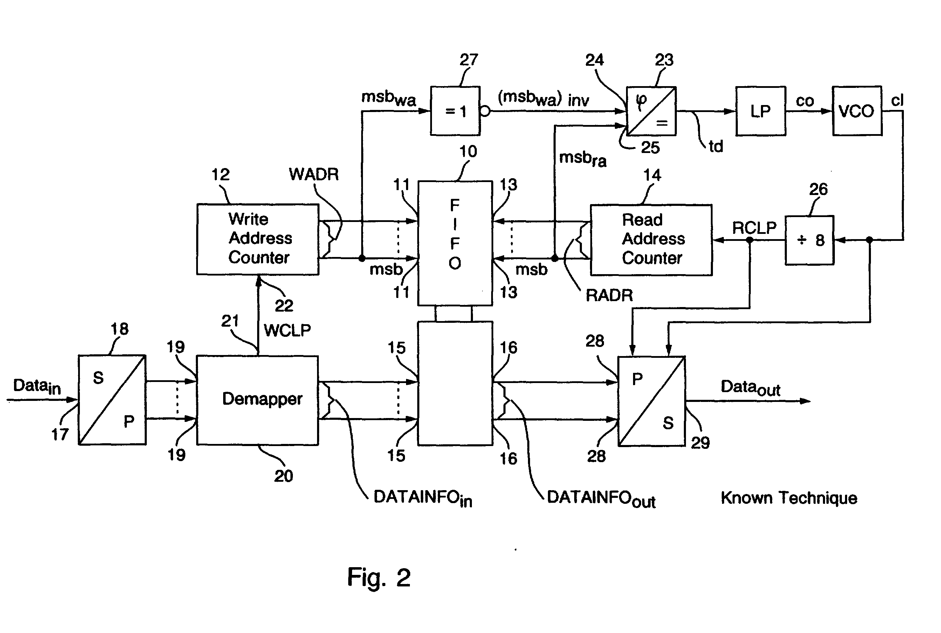

Figure 2 illustrates a known arrangement for writing data information into a memory and for reading data information therefrom. The memory 10, which is an addressable memory, is comprised of a FIFO-register (First In First Out) which comprises forty-four memory positions, each of which is intended to store one word. The memory 10 has write address inputs 11 for receiving write addresses WADR generated in a write address counter 12, and also includes read address inputs 13 for receiving read addresses RADR generated in a read address counter 14. The memory is further provided with data inputs 15 for receiving data information DATAINFOᵢₙ and data outputs 16 for delivering datainformation DATAINFOₒᵤₜ.

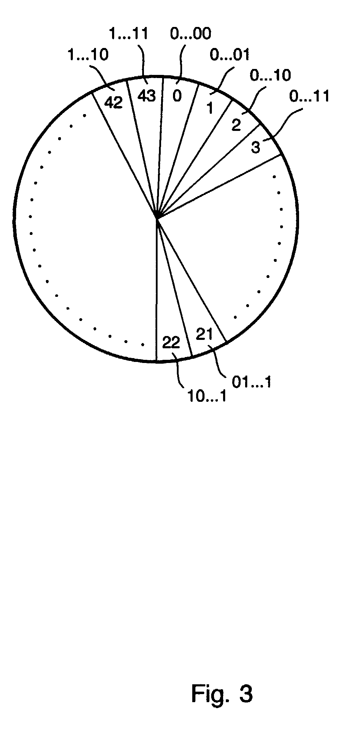

For the purpose of describing the operation of a known arrangement, it is assumed that the data information to be written into the memory appears in frames Dataᵢₙ of the kind described with reference to Figure 1. Frames Dataᵢₙ containing data information and other information arrive at an input 17 on a series/parallel converter 18, which delivers the information in words to the data inputs 19 on a Demapper 20. An output 21 on the Demapper circuit 20 in connected to an input 22 on the write address counter 12. The content of the frames Dataᵢₙ is decoded by the Demapper circuit 20, and a write signal pulse WCLP is delivered to the write address counter 12 for each byte of data information to be written into the memory FIFO, therewith to generate a new write address. One word of data information DATAINFOᵢₙ is written into the memory at the momentary address contained in the write address counter. The write addresses WADR, and also the read addresses, are generated cyclicly, as illustrated in Figure 3. The addresses are generated in binary coded form at cyclicly repeated intervals. The memory has forty-four addresses which range from zero to forty-three and the addresses are binary coded in a manner such that at the transition between address twenty-one and address twenty-two, the most significant bits in the binary code will pass from zero to one, while at the transition between address forty-three and zero, the most significant bit in the binary code will pass from one to zero.

The known arrangement uses a phase locking circuit to control the read-out rate from the memory 10. This phase locking circuit includes a phase detector 23, a lowpass filter LP and a voltage controlled oscillator VCO. The phase detector 23 has a first input 24 on which there is received a first signal which may have either one of two levels, a high level or a low level. A second signal which can assume a high or a low level in a corresponding manner is received on a second input 25. The phase detector 23 functions to detect the time difference between corresponding level changes, from low to high level, in the first and the second signal and produces on an output a time difference signal td relating to the detected time difference. The output of the phase detector 23 is connected to an input on the lowpass filter LP on which the time difference signal td is received. In the lowpass filter LP there is derived a mean time value from consecutively received time difference signals td. An output on the lowpass filter LP is connected to the voltage controlled oscillator VCO. The lowpass filter delivers a control signal CO to the voltage controlled oscillator VCO, which produces pulses cl on an output clock at a frequency which depends on the control signal CO. Thus, the voltage controlled oscillator VCO produces clock pulses cl which may vary in frequency. The clock pulses may vary about a nominal frequency which corresponds to the nominal frequency at which data information DATAINFOᵢₙ appears in the SDH-system. The output on the voltage controlled oscillator VCO is connected to an input of a counter 26 which has an output connected to the read address counter 14. The clock pulses cl are delivered to the counter 26, which with each eight clock pulses received delivers a read clock puls RCLP to the read address counter 14 for reading-out one word from the address disclosed by the counter content of the read counter 14.

The first input 24 on the phase detector 23 is connected to the output of an inverting circuit 27, which has an input connected to the most significant bit msb_{wa} on write addresses WADR delivered to the memory 10. The second input 25 is connected directly to the most significant bit msbᵣₐ on read addresses RADR delivered to the memory 10.

The aforedescribed known arrangement with which data information is written into and read from a memory in a manner such that the read-out rate is, on average, equally as high as the write-in rate operates in the following manner. In a normal state, the write addresses WADR are generated with a shift from the read addresses RADR of one half address cycle, or are shifted from the read addresses as far as possible. This shift is desirable in order for the margins to be as wide as possible, so as to obviate the risk of data being written into and read from one and the same memory position simultaneously when the write-in rate changes. When the write address zero is generated, the read address 22 is generated simultaneously in a normal operating state, and so on. The most significant bit in the binary coded addresses changes its level only twice during an address cycle. These changes occur at a first address transition, which occurs at the transition between addresses twenty-one and twenty-two, when the most significant bit passes from a low to a high level, and at a second address transition, one half address-cycle later, at the transition between the addresses forty-three and zero, when the most significant bit in the binary coded addresses passes from a high to a low level (see Figure 3). The first signal (msb_{wa})ᵢₙᵥ received on the first input 24 of the phase detector derives from the level of the most significant bit on generated write addresses. However, the first signal (msb_{wa})ᵢₙᵥ also corresponds to the inverted level, since it has passed through the inverting circuit 27. The second signal msbᵣₐ corresponding to the actual level of the most significant bit of generated read addresses is received on the second input 26 of the phase detector. In the normal state, in which write and read addresses are generated with a phase shift of one half of an address cycle, the first and the second signal switch from a low to a high level simultaneously, since the first signal is inverted. In a normal state, the phase detector thus receives corresponding level changes from low to high levels in the incoming signals simultaneously, once with each address cycle. The corresponding level changes in the most significant bits in generated read and write addresses are thus received simultaneously in the normal state, i.e. when incoming frames solely contain a nominal number of data information units and the write-in rate does not therefore deviate from the nominal write-in rate. On the other hand, corresponding level changes in incoming signals to the phase detector are received with a time shift when the write-in rate has been changed, so that write addresses and read addresses are generated with a shift which deviates from one half of an address cycle. The phase detector 23 delivers to the lowpass filter LP time difference signals td which relate to the time difference between corresponding level changes in the signals arriving at the phase detector 23. A mean time value is derived from consecutive time differences td in the lowpass filter. The mean time value thus forms a mean value of deviations from the normal state between generated write addresses and generated read addresses. The lowpass filter LP deliver to the voltage controlled oscillator VCO a control signal CO obtained from the derived mean time values, so as to adjust the frequency at which clock pulses cl are delivered from the oscillator VCO and therewith either increase or reduce the rate at which read addresses are generated.

Data information DATAINFOₒᵤₜ is read wordwise from the memory 10 at the rate at which the read addresses are generated. The memory data outputs 16 are connected to inputs 28 on a parallel/series-converter P/S which series converts the data information read wordwise from the memory and delivers the information on an output 29 in outgoing frames Dataₒᵤₜ.

Thus, the phase detector 23 of the known arrangement compares a predetermined first address transition in the sequence of write addresses directly with a predetermined number of second address transitions in the sequence of read addresses. These address transitions differ by one half address cycle, so as to occur simultaneously when the write-in rate is nominal. When a change occurs in the write-in rate and said rate therewith deviates from the nominal rate as earlier described, the address transitions will occur at a given time difference which results in an increase or a decrease in the frequency at which clock pulses c1 are generated, therewith to adjust the read-out rate in keeping with the changed write-in rate. As beforementioned, this momentary change in the read-out rate will result in jitter, for instance. Consequently, an advantage is afforded when using instead an inventive arrangement to transmit data information from an SDH-system to a PDH-system when data information is divided on frames in accordance with the new standard for 155 MHz-signals, or in some similar manner.

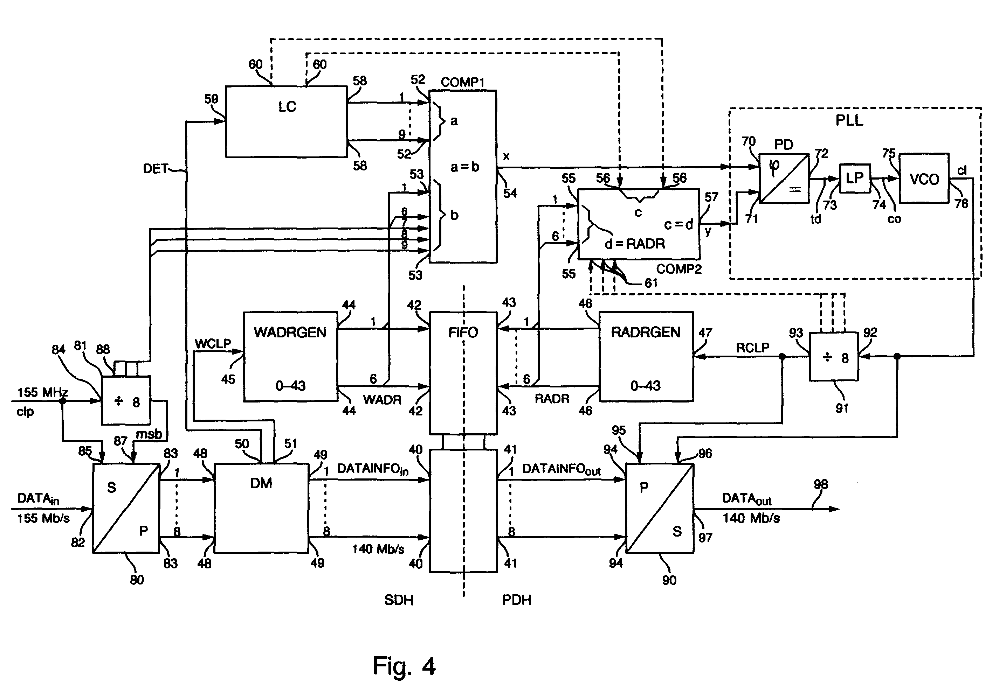

Figure 4 illustrates an embodiment of an inventive arrangement for transmitting data information from a SDH-system to a PDH-system. Data information DATAINFOᵢₙ and other information OTHER occurring in the SDH-system is divided on frames Dataᵢₙ in accordance with the above description made with reference to Figure 1. The arrangement illustrated in Figure 4 includes essentially an addressable memory FIFO into which data information is written and from which data information is read, a write address generator WADRGEN, a read address generator RADRGEN, a detecting means DM for establishing a change in the rate at which data information shall be written into the memory, a first derivating means KOMP1, a second derivating means KOMP2, an activating means LC and a phase locking circuit PLL for regulating the rate at which information is read from the memory, so that the read-out rate will, on average, be equally as high as the rate at which information is written into the memory FIFO.

The addressable memory FIFO delimits the SDH-system from the PDH-system and is used for intermediate storage of data information DATAINFOᵢₙ when transmitting data between the two systems. The memory FIFO includes forty-four eight-bit register or memory positions, each of which has a separate address. The memory has eight data inputs 40 for receiving simultaneously the parallel information of eight bits, eight data outputs 41 for delivering the parallel information of eight bits, six write address inputs 42 and six read address inputs 43.

The write address generator WADRGEN includes a write address counter which counts forwards forty-four six-bit binary write addresses WADR between zero and forty-three at cyclicly repeated intervals. Each write address corresponds to the address of one memory position in the memory FIFO. The memory includes forty-four memory positions, since this number is sufficient for the application concerned. The write address generator WADRGEN is provided with six outputs 44 on which the generated write addresses WADR are delivered to the write address inputs 42 on the memory FIFO, wherein data information is written into the FIFO-register at the address disclosed on the write address inputs 42. Incoming write clock pulses WCLP are applied to a write pulse input 45, and the write address counter generates a new write address WADR for each write clock pulse, this write address being produced on the outputs 44.

The read address generator RADRGEN includes a six-bit counter which counts forward forty-four binary read addresses RADR between zero and forty-three at cyclicly repeated intervals, which are the same as those for the write addresses. The read address generator RADRGEN is provided with six outputs 46 on which generated read addresses RADR are delivered to the read address inputs 43 on the memory FIFO, wherein data information is read-out from the FIFO-register address disclosed on the read address inputs 43. Read clock pulses RCLP are delivered to a read pulse input 47, and the read address counter generates a new read address RADR for each read clock pulse received, this new read address being produced on the output 46.

The detecting means DM is comprised of a Demapper circuit and has eight data inputs 48 for receiving simultaneously the bits in a word of data information DATAINFOᵢₙ or other information OTHER, and also has eight data outputs 49 for delivering simultaneously the bits of a word data information DATAINFOᵢₙ that is to be written into the memory FIFO for further transmission to the PDH-system. The data outputs 49 are connected to the data inputs 40 of the memory. The detecting means DM is also provided with a first and a second control output 50, 51 for delivering control information concerning the write-in and the read-out of datainformation into and from the memory. The second control output 51 is connected to the write pulse input 45 on the write address generator WADRGEN, for delivering write clock pulses WCLP to the write address generator. A write clock pulse is delivered for each word that is to be written into the memory.

The first deriving means KOMP1 includes a first comparison means, or comparator. The deriving means KOMP1 includes nine first inputs 52 to which a first reference address a comprising nine bits is applied. On nine second inputs 53 there is applied a comparison address b which is comprised of the same write address WADR as those supplied to the memory FIFO and three modulo-8-bits. The first reference address a is compared in the first comparator with the comparison address b and a comparison magnitude x is delivered on an output 54, this comparison magnitude having the form of a write signal pulse xpls when agreement is found between the first reference address a and the comparison address b. The comparison magnitude x is comprised of a signal having a constant level, except when interrupted by a write signal pulse.

The second deriving means KOMP2 includes a second comparison means or a second comparator. Stored in the second comparator KOMP2 is a second reference address c which comprises six bits. A second comparison address d, which is comprised of the same read addresses RADR as those delivered to the memory FIFO, is delivered to six first inputs 55. The second reference address c is compared in the second comparator with the second comparison address d and there is delivered on an output 57 a second comparison magnitude y which when similarity is found between the second reference address c and the second comparison address d is comprised of a read signal pulse ypls. The second comparison magnitude y is comprised of a signal whose level is constant, except when the signal is broken by a read signal pulse ypls.

The activating means LC includes a logic circuit having nine outputs 58 which are connected to the input 52 of the first comparator KOMP1, for delivering the first reference address a to the first comparator KOMP1. The activating means is also provided with an input 59 which is connected to the first control output 50 for receiving a detection signal DET from the detection signal DM. The activating means LC receives from the detection circuit, via the detection signal DET, information which discloses a change in the rate at which data information DATAINFOᵢₙ is written into the memory FIFO.

The phase locking circuit PLL includes a phase detector PD, a lowpass filter LP, and a voltage controlled oscillator VCO. The phase detector has a first input 70 connected to the output 54 on the first comparator KOMP1 for receiving the first comparison magnitude x. The phase detector also has a second input 71, which is connected to the output 57 on the second comparator KOMP2 for receiving the second comparison magnitude y. The phase detector PD functions to detect when, in time, the first comparison magnitude x is comprised of a write signal pulse xpls and when, in time, the second comparison magnitude is comprised of a corresponding read signal pulse ypls, and to detect the time difference between corresponding write signal pulses xpls and read signal pulses ypls. A time difference signal td which contains information concerning the detected time difference between corresponding write signal pulse xpls and read signal pulse ypls is delivered on output 72 of the phase detector. The lowpass filter LP has an input 73 connected to the output 72 of the phase detector, for receiving the time difference signal td. There is derived in the lowpass filter LP a mean value of the time differences between consecutive corresponding write signal pulses and read signal pulses received in the time difference signal td. A control signal co which contains control information is delivered on an output 74 of the lowpass filter LP to the voltage controlled oscillator VCO. This control information depends on the mean values of the time differences between corresponding write signal pulses and read signal pulses derived in the lowpass filter. The voltage controlled oscillator VCO has an input 75 on which the control signal co is received. The voltage controlled oscillator VCO produces on an output 76 a clock signal cl which includes clock pulses having a frequency which is dependent on the control information in the control signal co. The voltage controlled oscillator VCO delivers clock pulses which may thus vary in frequency. The rate of the clock pulses varies around a nominal frequency which corresponds to the nominal rate at which data information DATAINFOᵢₙ occurs in the SDH-system.

In addition to the means already described, the inventive arrangement also includes means for writing data information into the memory FIFO and for reading datainformation therefrom.

For datainformation read-in purposes, the inventive arrangement also includes a series/parallel converter 80 and a modulo-8-counter 81. The series/parallel converter 80 has a data input 82 on which earlier described frames Dataᵢₙ containing serial data information DATAINFOᵢₙ and other information OTHER are received. The information contained in the frames Dataᵢₙ arrives at a rate of 155 Mb/s. The information contained in the frames Dataᵢₙ is converted in parallel wordwise and is delivered wordwise from the series/parallel converter 80 on eight data outputs 83 connected to corresponding data inputs 48 on the detection circuit DM. The modulo-8-counter 81 controls the series/parallel converter in a manner such that the information contained in the frames Dataᵢₙ which enter the series/parallel converter 80 serially, will be delivered on the outputs 83 in words of eight bits. The modulo-8-counter 81 has an input 84 on which clock pulses clp having the frequency of 155 MHz are applied. The incoming clock pulses clp are also applied to a second input 85 on the series/parallel converter. The clock pulses clp have the same frequency as, and are fully synchronous with the information contained in the frames Dataᵢₙ. The counter 81 includes three binary bits which are counted forwards from the value zero to the value seven at cyclicly repeating intervals in eight steps. The counter steps forward one step for each incoming clock pulse clp. The counter 81 has a first output 86 on which the level of the most significant bit msb is delivered to a third input 87 on the series/parallel converter. The level of the most significant msb passes from a high to a low level once with each eighth clock pulse clp and this is utilized in the parallel conversion, since each word contains eight bits. Eight bits, corresponding to one word, of information are written from the frames Dataᵢₙ into a register in the series/parallel converter. One bit at a time is written into the register over the duration of one clock pulse clp. The most significant bit msb passes from a high to a low level at each eighth clock pulse clp and the parallel information in the eight-bit register is then transmitted to the detection circuit DM via the outputs 83. The three bits in the modulo-8-counter are delivered on three data outputs 88 connected to three of the second inputs 53 on the first comparitor KOMP1. The three bits delivered by the modulo-8-counter constitute the three least significant bits in the first comparison address b.

For the purpose of reading-out data information from the memory FIFO, the inventive arrangement includes a parallel/series converter 90 and a further modulo-8-counter 91. The modulo-8-counter has a clock pulse input 92 connected to the output 76 on the voltage controlled oscillator VCO, for receiving the clock pulses cl from the oscillator. The counter 91 has three binary bits and counts from zero to seven with cyclic repetition. The counter is stepped forwards one step with each clock pulse cl and the counter 91 delivers the aforesaid read clock pulse RCLP on an output 93 with each eighth clock pulse. The parallel/series converter 90 has eight data inputs 94 connected to the data outputs 41 on the memory FIFO for receiving wordwise datainformation DATAINFOₒᵤₜ read-out from the memory FIFO. The parallel/series converter 90 has a second input 95 connected to the output on the counter 91, for receiving read clock pulses RCLP. A momentary read address is generated for each read clock pulse RCLP and the word data information DATAINFOₒᵤₜ which is stored at the momentary address is read-out from the memory to the parallel/series converter 90. The information DATAINFOₒᵤₜ read-out from the momentary address is stored intermediately in an eight-bit register in the parallel/series converter 90. The parallel/series converter 90 has a third input 96 connected to the input 92 of the counter, for receiving the clock pulses cl which control the rate at which information is read-out from the memory FIFO. With each clock pulse cl received, the eight-bit register delivers intermediately stored datainformation DATAOUTₒᵤₜ bitwise from the parallel/series converter on a data output 97. The data information DATAOUTₒᵤₜ read-out from the register is divided in frames Dataₒᵤₜ and is transmitted further in the PDH-system on an outgoing line 98. The rate at which the data information occurs in the PDH-system varies around the nominal rate 140 Mb/s.

The inventive arrangement operates in the following manner. Frames Dataᵢₙ containing serial data information DATAINFOᵢₙ and other information OTHER arrives at the series/parallel converter 80 in the SDH-system. The information in the frames Dataᵢₙ is parallel converted in the aforedescribed manner and is delivered wordwise to the detection circuit DM.

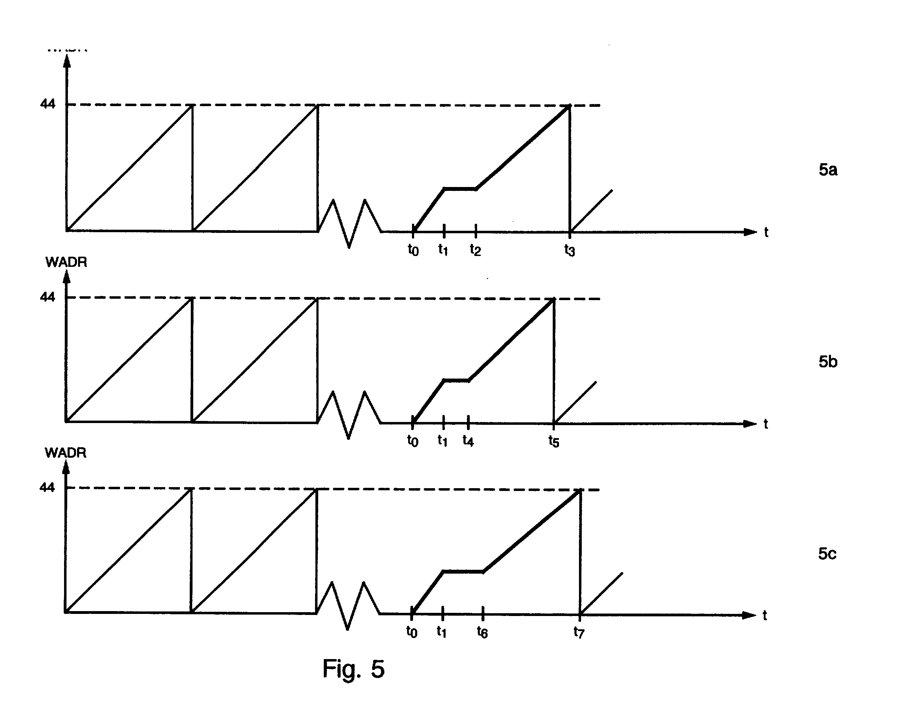

The detection circuit DM decodes the information OTHER in each occurring frame Dataᵢₙ, so as to establish whether or not the frame contains a nominal number of data information units according to Figure 1a or more data information units than this nominal number, according to Figure 1b, or fewer data information units than nominal, according to Figure 1c. The other information units OTHER in a frame therefore contain information which discloses whether or not the frame contains a nominal number of data information units DATAINFOᵢₙ, or fewer data information units than the nominal number or more datainformation units than the nominal number. For instance, two bits in the other information OTHER may disclose the number of data information units in the frame. 00 discloses that the frame contains a nominal number of data information units. 01 indicates that the frame contains more data information units than is nominal and 10 denotes that the frame contains fewer data information units than is nominal. Each datainformation unit DATAINFOᵢₙ incoming to the detection circuit DM shall be written into the memory FIFO for further transmission to the PDH-system. To this end, the detection circuit therefore delivers a write clock pulse WCLP to the write address generator WADRGEN for each word of datainformation received. In practice, the detection circuit DM delivers the write clock pulse signal WCLP when it has received a group of eight-bit datainformation. It is not necessary for these bits to derive from one and the same data information word, but may derive from two words. This is because other information OTHER may be incorporated bitwise in the data information DATAINFOᵢₙ. The write address counter counts forward the next momentary write address WADR in the cyclic sequence with each write clock pulse WCLP received, and when the write address counter delivers the momentary address on the outputs 44, a word comprising eight bits of data information is written into the memory position having the corresponding address. Thus, this write-in procedure generates successively a cyclic sequence of write addresses WADR in a manner such that a new write address is generated for each data information word to be written into the memory while the generation of write addresses is interrupted with each other information word OTHER. In this way, there is generated a nominal number of write addresses with each frame when a frame having a nominal number of words passes through the detection circuit, and more write addresses are generated per frame than the nominal number when a frame containing more data information words than is nominal passes through the detection circuit, and correspondingly fewer write addresses are generated per frame than is nominal when a frame having fewer datainformation words than nominal passes through the detection circuit. Figures 5a-5c illustrate the generation of write addresses in these three separate cases. The vertical axis shows the number of write addresses WADR that are generated in one address cycle. The horizontal axis shows time t. A frame, or more correctly the part of a frame relevant to the present invention, includes 258, 261 or 264 data information words which are to be written into the memory. Since an address cycle contains only 44 addresses, several cycles of write addresses WADR are generated for each frame. Figures 5a-5c illustrate respectively three different cases of the generation of write addresses WADR and interruption in the generation of write addresses.

Figure 5a illustrates the generation of write addresses WADR when the occurrent frame Dataᵢₙ contains a nominal number of datainformation words DATAINFOᵢₙ. Several cycles of write addresses WADR are generated prior to time t₀. The first address in the address cycle is generated at time t₀. The generation of write addresses is interrupted between the time points t₁ and t₂. This interruption extends over that period of time in which a nominal number of other information words OTHER are received in the detection circuit. The last write address in the address cycle is generated at time point t₃.

Figure 5b illustrates the generation of write addresses WADR when the occurrent frame Dataᵢₙ contains more data information words DATAINFOᵢₙ than is nominal. Several cycles of write addresses WADR are generated prior to time t₀. The first address in the address cycle is generated at time t₀. Between the time points t₁ and t₄, the generation of write addresses is interrupted for a period of time which is shorter than the interruption made in Figure 5a. The interruption extends over that period of time in which a fewer number of other information words OTHER than is nominal are received in the detection circuit DM. The last write address in the address cycle is generated at time point t₅, prior to time point t₃ in Figure 5a. Since the interruption, or pause, in Figure 5b is shorter than the interruption in Figure 5a, the addresses in the address cycle which includes this interruption are generated in a shorter space of time in Figure 5b than in Figure 5a. In other words, write addresses WADR are generated at a higher rate between the time points t₀ and t₅ in Figure 5b than between the time points t₀ and t₃ in Figure 5a.

Figure 5c illustrates the generation of write addresses WADR when the occurrent frame Dataᵢₙ contains fewer data information words DATAINFOᵢₙ than is nominal. Several cycles of write addresses WADR are generated prior to time t₀. The first address in the address cycle is generated at time t₀. Between the time points t₁ and t₆, there is made a longer pause in the generation of write addresses than the pause made in Figure 5a. This pause extends over the time in which several other information words OTHER than nominal are received in the detection circuit DM. The last write address in the address cycle is generated at time point t₇, after time point t₃ in Figure 5a. Since the pause in Figure 5c is longer than the pause in Figure 5a, the addresses in the address cycle which contains the pause are generated over a longer period of time in Figure 5c than in Figure 5a. In other words, the rate at which write addresses WADR are generated is slower between the time points t₀ and t₇ in Figure 5c than between the time points t₀ and t₃ in Figure 5a.

Thus, write addresses WADR are generated in the inventive arrangement in the manner described with reference to Figures 5a-5c. The Figures also illustrate how the rate at which the write addresses are generated can vary around the nominal rate illustrated in Figure 5a. Data information DATAINFOᵢₙ is delivered wordwise from the detection circuit DM to the data inputs 40 on the memory FIFO and are written wordwise into the memory FIFO in memory positions disclosed by the write addresses WADR on the write address inputs 42 of the memory FIFO. This write-in of data information takes place in conjunction with the generation of a momentary write address WADR.

Read addresses RADR are generated continuously, without interruption, when reading data information DATAINFOₒᵤₜ from the memory FIFO. The rate at which the addresses are generated, however, may vary so as to follow the rate at which write addresses WADR are generated. The same memory addresses as the memory addresses in the cyclic sequence of write addresses are included in the sequence of read addresses and in the same order. Data information DATAINFOOUTₒᵤₜ is read wordwise from memory positions in the memory FIFO disclosed by the read addresses RADR on the read address inputs 43 of the memory FIFO.

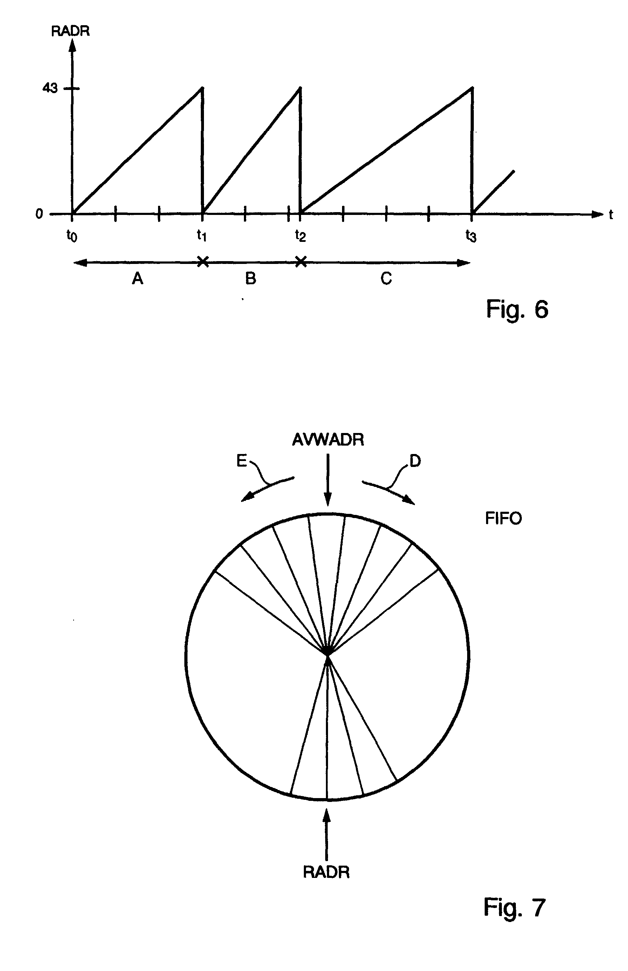

Figure 6 illustrates the continuous generation of read addresses RADR and also shows how the generation rate varies. The illustrated rate variations are greatly exaggerated. The vertical axis shows the read addresses RADR of one address cycle. The horizontal axis shows time t. All forty-four addresses in an address cycle are generated during the time period A, between the time points t₀ and t₁, at a nominal rate, which takes place when write addresses are generated at the nominal rate in accordance with the Figure 5a illustration. During the next time period B, between the time points t₁ and t₂, the read addresses RADR in the address cycle are generated at a higher rate than the nominal rate, which takes place when the write addresses WADR are generated at a higher rate than the nominal rate, in the manner shown in the Figure 5b illustration. On the other hand, the read addresses RADR in the address cycle are generated at a slower rate than the nominal rate during the time period C, between the time points t₂ and t₃, which takes place when the write addresses WADR are generated at a lower rate than the nominal rate, as shown in the Figure 5c illustration.

Thus, the memory FIFO is used for writing-in and reading-out data information simultaneously. Certain memory positions are used for writing-in information at the same time as other memory positions are used for reading-out information. Consequently, parallel write addresses WADR and read addresses RADR are generated for writing-in and reading-out datainformation. However, it is highly essential that the momentary addresses in the sequence of write addresses are considerably shifted from the momentary addresses in the sequence of read addresses when generating said addresses. This is to eliminate the possibility of data information being written into and read from the memory at the same memory positions simultaneously. In an ideal state, a starting state, the read addresses are generated with a phase shift of one-half address cycle from the simultaneously generated write addresses. In practice, however, a momentary mean value AVWADR of consecutive write addresses is generated in the starting state phase shifted through one-half cycle from corresponding momentary read addresses RADR. The mean value of generated write addresses is used because the generation of write addresses is not continuous, but includes the aforedescribed interruption. In the starting state, generated write addresses will therefore vary around a write address mean value AVWADR which is shifted through one-half address cycle from corresponding read addresses RADR.

Figure 7 illustrates an addressable memory FIFO. The "cake slices" in the memory shown in Figure 7 illustrate the memory positions with associated addresses. An upper arrow illustrates a momentary mean write address value AVWADR, while a bottom arrow illustrates a simultaneous, momentary read address RADR. The momentary mean write address value AVWADR and corresponding, simultaneous read addresses RADR are phase shifted through one-half of an address cycle in relation to one another in the Figure 7 illustration. The two arrows are continuously displaced clockwise subsequent to the generation of new write addresses and read addresses. Provided that the write addresses and the read addresses are generated at mutually the same rate, the momentary mean write address value AVWADR and a momentary, simultaneous mean read address value RADR will be displaced mutually through one-half of an address cycle. When the write-in rate increases as a result of the frames in the SDH-system containing more data information units DATAINFOᵢₙ, the rate at which write addresses WADR are generated will also increase. This can be illustrated in Figure 7 by shifting the momentary mean write address value AVWADR clockwise in the drawing, as shown by a third arrow D, thereby reducing the phase difference between the momentary mean value address AVWADR and corresponding read address RADR. When the write-in rate decreases, because the frames occurring in the SDH-system contain fewer data information units DATAINFOᵢₙ, the rate at which write addresses WADR are generated will also decrease. This can be shown in Figure 7 by displacing the momentary mean write address value AVWADR clockwise, in the direction shown by a fourth arrow E, wherewith the phase difference between the momentary mean value address AVWADR and corresponding read address RADR will decrease.

It is the intention of the invention to adjust the read-out rate to the write-in rate, such that the phase shifts between momentary read addresses RADR and the simultaneous, momentary mean write address values AVWADR are continuously adjusted back to the starting state after a phase shift from said starting state. The phase shift between momentary read addresses RADR and simultaneous, momentary mean write address values AVWADR deviate from one-half of an address cycle when there is no agreement between the write-in rate and the read-out rate, although this phase shift will return to one-half of an address cycle when the read-out rate is adjusted to be equally as high as the write-in rate. Thus, the inventive arrangement functions to ensure that, on average, the read-out rate will be equally as high as the write-in rate and, therewith, also that the read addresses RADR are generated, on average, at the same rate as the write addresses WADR.

The first reference address a comprising nine binary bits is formed in the logic circuit in the activating means. The reference address a is variable. The six most significant bits correspond to a write address. The three least significant bits are used to denote eighths of the write addresses. In the starting state, the first reference address a is assigned the value zero, corresponding to the write address zero, wherein all nine bits denote the value zero. The first reference address a is transmitted from the activating means LC to the first derivation means KOMP1 and stored therein. The second reference address c comprising six binary bits which correspond to a write address is stored permanently in the second comparitor or derivation means KOMP2. In the starting state, the second reference c is assigned the value twenty-two. The mutual phase shift of the reference addresses a, c in the starting state therewith corresponds to the phase shift between a momentary mean write address value AVWADR and corresponding momentary read addresses RADR in the starting state, i.e. a shift of half an address cycle.

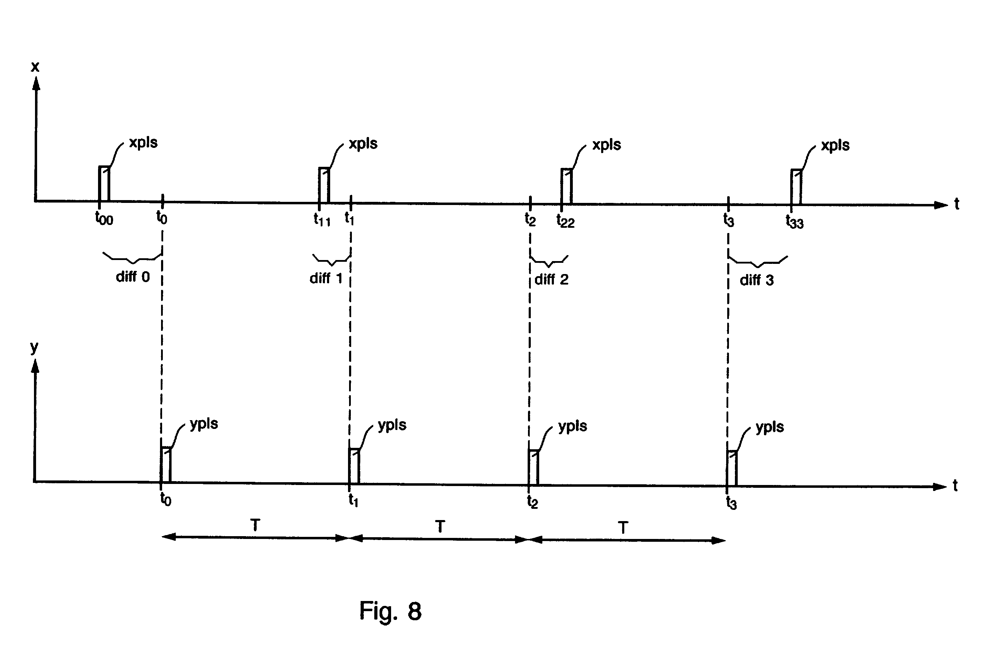

The first comparitor KOMP1 receives the second comparison address b, which includes the momentary write addresses WADR and three modulo-8-bits from the modulo-8-counter 81. The first reference address a is compared continuously in the comparitor KOMP1 with the first comparison address b and the result of the comparison denotes the first comparison magnitude x. When the comparison shows similarity between the addresses a, b, a write signal pulse xpls is sent from the comparitor KOMP1 to the phase detector PD in the phase-locking circuit PLL. In the starting state, a write signal pulse xpls is delivered when the write address WADR and the three modulo-8-bits from the counter 81 are zero. This will therefore occur once with each write address cycle. The second comparitor KOMP2 receives the second comparison address d, which includes the momentary read addresses RADR. The second reference address c is compared continuously in the comparitor KOMP2 with the second comparison address d, and the comparison result denotes the second comparison magnitude y. When the comparison shows agreement between the second addresses c, d, a read signal pulse ypls is sent from the comparitor KOMP2 to the same phase detector PD. In the starting state, a read signal pulse ypls is transmitted when the read address RADR twenty-two is generated. This therefore occurs once with each read address cycle. The write signal pulses xpls are generated, on average, at the same time as the read signal pulses ypls in the starting state of the system, since the phase shift between momentary read addresses RADR and corresponding momentary mean write address values AVWADR correspond to the mutual phase shift of the reference addresses a, c, as illustrated in Figure 8.

Figure 8 illustrates the write and read signal pulses xpls, ypls delivered by said comparitors KOMP1, KOMP2 when write addresses WADR and read addresses RADR are generated in the starting state of the system. The respective vertical axes x and y correspond to the first and the second comparison magnitudes. The horizontal axes show time t. The comparison magnitudes have a low level, except when the aforesaid pulses are generated. The lower diagram shows read signal pulses ypls that are generated at time points t₀, t₁, t₂ and t₃. The four read signal pulses are generated during four mutually sequential address cycles, and since the read addresses RADR are generated continuously, the read signal pulses ypls will occur at a constant time interval T between the pulses, in the starting state of the system. The read signal pulses ypls are generated when the read address twenty-two is generated in the read address generator RADRGEN. The time period between the generation of the read addresses RADR twenty-two in a sequence of address cycles will therefore be constant. Since the write addresses WADR are not generated continuously, but disrupted with pauses, the write signal pulses xpls will, on average, only be generated at the same time as corresponding read signal pulses ypls in the starting state of the system. Thus, corresponding momentary read signal pulses and write signal pulses will not be generated exactly simultaneously with one another, but that a momentary write signal pulse xpls will occur at a given time shift in relation to a corresponding momentary read signal pulse. The upper diagram in Figure 8 shows momentary write signal pulses xpls and corresponding momentary read signal pulses ypls. The write signal pulses xpls occur at time points t₀₀, t₁₁, t₂₂ and t₃₃ in four mutually sequential address cycles. The momentary read signal pulse ypls occurring at time point t₀ has a corresponding write signal pulse xpls which occurs at time point t₀₀, the read signal pulse ypls occurring at time point t₁ has a corresponding write signal pulse xpls at time point t₁₁, and so on. It will be seen from the Figure that the write signal pulses xpls occur before the corresponding read signal pulse ypls in two instances and that the write signal pulses occur after corresponding read signal pulses in another two instances. However, the sequence of write pulses xpls shown in the Figure occur, on average, at the same time as the corresponding sequence of read addresses ypls. Thus, in the starting state of the system, a sequence of momentary write signal pulses xpls is generated, on average, at the same time as the corresponding momentary read signal pulses ypls.

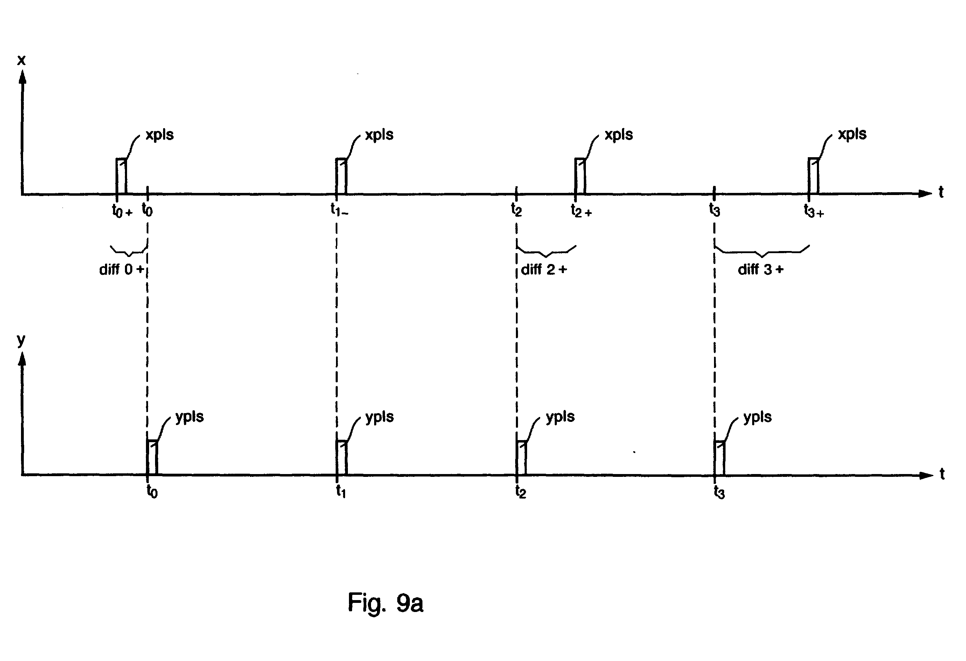

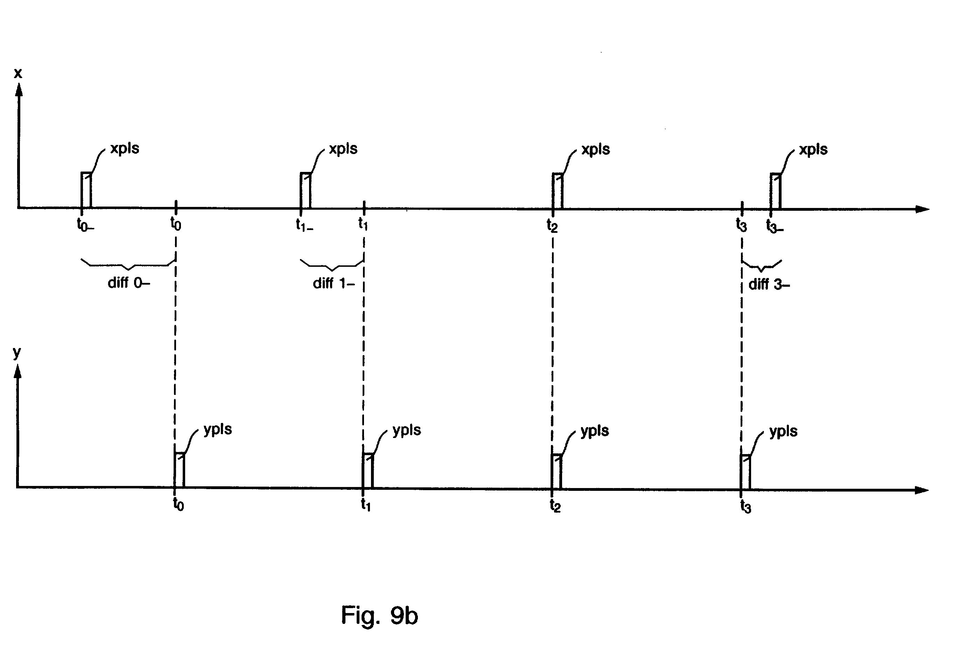

Figures 9a and 9b show that momentary write signal pulses xpls are, on average, generated with a time shift in relation to corresponding read signal pulses ypls, when the phase shift between momentary read addresses RADR and corresponding mean write address values AVWADR differ from the phase shift between the reference addresses a, c as a result of an increase or a decrease in the rate at which data information is written-in.

Figure 9a illustrates when the write signal pulses xpls occur in relation to corresponding read signal pulses ypls at a slower write-in rate. The write signal pulses xpls will then occur later in comparison with the write signal pulses xpls in the Figure 8 illustration, meaning that the write signal pulses xpls in the Figure 9a illustration are shifted to the right in comparison with the write signal pulses in the Figure 8 illustration. The write signal pulses in the Figure 9a illustration occur at the time points t₀₊, t₁₋, t₂₊ and t₃₊. Thus, on average, the write signal pulses xpls occur later than the corresponding read signal pulses ypls when the write-in rate decreases.

Figure 9b illustrates the case when the write signal pulses xpls occur in relation to corresponding read signal pulses ypls at a higher write-in rate. The write signal pulses xpls then occur earlier than the write signal pulses xpls in the Figure 8 illustration, which means that the write signal pulses xpls in Figure 9b are shifted to the left in comparison with the write signal pulses in Figure 8. The write signal pulses in Figure 9b occur at the time points t₀₋, t₁₋, t₂ and t₃₋. Thus, on average, the write signal pulses xpls occur earlier than the corresponding read signal pulses ypls when the write-in rate increases.

The write signal pulses xpls and the read signal pulses ypls are received in the phase detector PD which detects the time difference between a received write signal pulse xpls and corresponding read signal pulse. Information concerning detected time differences is sent to the lowpass filter LP, which derives a mean value from detected time differences. The time differences diff0, diff1, diff2 and diff3 are detected in Figure 8. The average time difference is calculated to zero in the lowpass filter from these values, which means that the rate at which read addresses are generated is equally as high as the rate at which write addresses are generated, which in turn means that the rate at which read addresses RADR are generated shall not be changed. The control signal co to the voltage controlled oscillator VCO will then contain information to the effect that the rate of the clock pulses cl shall be kept constant. On the other hand, if average time difference exists, positive or negative, the control signal co will contain information to the effect that the rate of the clock pulses cl shall be changed.

In the example illustrated in Figure 9a, the time differences diff0+, diff2+ and diff3+ are detected instead. There is calculated in the lowpass filter from these values a mean positive time difference, which signifies that write addresses are generated at a slower rate than the rate at which read addresses are generated. This implies that the read address generating rate shall be lowered. The control signal co will then contain information to the effect that the clock pulse rate cl shall be lowered, so that read addresses and write addresses are generated at mutually the same rate.

In the example illustrated in Figure 9b, the time differences diff0-, diff1- and diff3- are detected instead. There is calculated in the lowpass filter from these values a mean negative time difference which signifies that the write address generating rate is higher than the rate at which read addresses are generated. This implies that the rate at which read addresses are generated shall be increased. The control signal co will then contain information to the effect that the clock pulse rate cl shall be increased, so that read addresses and write addresses will be generated at mutually the same rate.

In order to control the adjustment of clock pulses cl from the voltage controlled oscillator VCO, there is first established a change in the number of data information words in incoming frames Dataᵢₙ. This corresponds to establishing a change in rate in the generation of write addresses. The generation rate change is established with the aid of the detection circuit DM which in each incoming frame Dataᵢₙ reads the two bits in the other information OTHER which denote whether the number of data information units in the frame is nominal, greater than nominal or smaller than nominal. When the number of data information words is greater or smaller than nominal, this indicates that there is a change in rate. When a rate change is established in the detection circuit, the rate change is masked initially for the phase detector PD, by changing the first reference address a to an extent which corresponds to the detected change. Masking is effected by changing the first reference address a in a manner which corresponds to the detected change in the number of incoming data information words. Information concerning detected changes in the number of data information words in incoming frames Dataᵢₙ is delivered to the activating means, i.e. the logic circuit LC, with two binary bits in the signal DET. The signal DET may include three different kinds of information. In a first case, the signal indicates that the first reference address a shall be changed in a positive direction to the same extent as the detected change. This takes place when the incoming frame Dataᵢₙ includes three data information units more than is nominal. For instance, if the reference address a is zero, the address shall be changed to three. In a second case, the first reference address a shall be changed in a negative sense by three addresses. This takes place when the incoming frame Dataᵢₙ includes three data information units fewer than is nominal. For instance, the reference address a is then changed from zero to forty-one. In the third case, the first reference address is left unchanged. This occurs when the incoming frame Dataᵢₙ contains a nominal number of data information units.

By changing the first reference address a in a manner which corresponds to the detected change in the rate at which write addresses are generated in the aforedescribed manner, the mutual phase shift between the two reference address a, c is changed to a value which is equally as large as the mean phase shift between generated write addresses and read addresses as a result of the detected rate change. As a result of the change of the reference address a, i.e. the mask, the write signal pulses xpls are not shifted from the read signal pulses in the manner illustrated in Figures 9a and 9b, and the write signal pulses xpls will occur, on average, at the same time as the read signal pulses ypls, despite the change in the rate at which write addresses WADR are generated. Masking is effected so that the phase-locking circuit PLL will not react immediately to the whole of the rate change that has been detected. As a result of the mask, the phase-locking circuit PLL will not "detect" immediately the change in the write-in rate, since the first reference address a is compensated for the changed write-in rate.

After masking the reference address a, or compensating said reference address, it remains to adjust the read-out rate to a value which is equal to the write-in rate. According to the present invention, this adjustment is effected in several steps.

The read-out rate is adjusted, by finally restoring the first reference address a successively to said starting state. In the case of the illustrative embodiment, this means that the first reference address a is changed back to zero in incremental steps. During this stepwise return of the reference address a to the starting state, the write signal pulses xpls will, on average, be generated with a time shift in relation to corresponding read signal pulses ypls. This will result in an adjustment of the readout rate, since the phase detector PD will receive write signal pulses xpls and read signal pulses ypls with a mean time difference, in the manner described with reference to Figures 9a and 9b. During this readjustment period, the phase detector PD receives write signal pulses and read signal pulses with small mean time differences, which results in small successive changes in the read-out rate until said rate is equally as high as the write-in rate.

Hitherto, and for the sake of simplicity, changes in the first reference address a, masking and readjustment, have been described as being effected by changing the reference address a solely in steps or increments which include complete addresses. However, an important feature of the invention is that the reference address a can also be changed in steps which are smaller than complete addresses. The first reference address may be divided into eight parts in each address, so that masking and readjustment can be effected in steps in which each step corresponds to one-eighth of the full address. To this end, the three least significant bits in the first reference address are used to denote one-eighths of complete addresses. The six most significant bits denote complete addresses. A comparison is made in the first comparitor KOMP1 between the reference address a and the comparison address b, and in order to enable the comparison to be made on a bit level, the comparison address b also includes nine bits. The three least significant bits in the comparison address b from the modulo-8-counter 81 enables the comparison to be made on a bit level. The three least significant bits in the comparison address are counted eight times for each write address WADR in the comparison address b.

In practice, the reference address a is not changed exactly by three addresses when masking the reference address a, but is changed short of three addresses, or more precisely is changed by two and six-eighths of the addresses. Thus, the most significant bits are given the binary address two and the least significant bits are given the binary value six. Thus, each address can be divided into eight parts having mutually different binary values between 000, 001, ..., 111, through the agency of the three least significant bits. The reason why the change is short of three addresses instead of being precisely three addresses, is because the SDH-system and the PDH-system have different bit rates. The time taken to transmit twenty-four bits of information in the SDH-system is equal to the time taken to transmit twenty-two bits in the PDH-system, since the rate is lower in the PDH-system than in the SDH-system. Thus, when changing the rate in the SDH-system, the corresponding change in the PDH-system is masked.

The readjustment can also be carried out in eighths of a step with the aid of the three least significant bits in the first reference address a. It is preferred to carry out the readjustment in eighths of a step of complete addresses. When the reference address a has the binary value two and six-eighths addresses and shall be adjusted back in eighths of a step, the readjustment is thus carried out in twenty-two steps before the reference address a has been returned to the value zero.

The reference address a is masked in one single step, wherein said first reference address a is changed through a corresponding number of addresses as the detected change in the number of datainformation words in incoming frames Dataᵢₙ. The return of the reference address is effected successively, wherein the read-out rate is adjusted. It may happen that a new masking is carried out before the preceding masking has had time to reduce. Consequently, the first reference address a may deviate by more than three addresses from the starting state and must therefore be readjusted at different speeds, depending on the extent in which it deviates from the starting state.

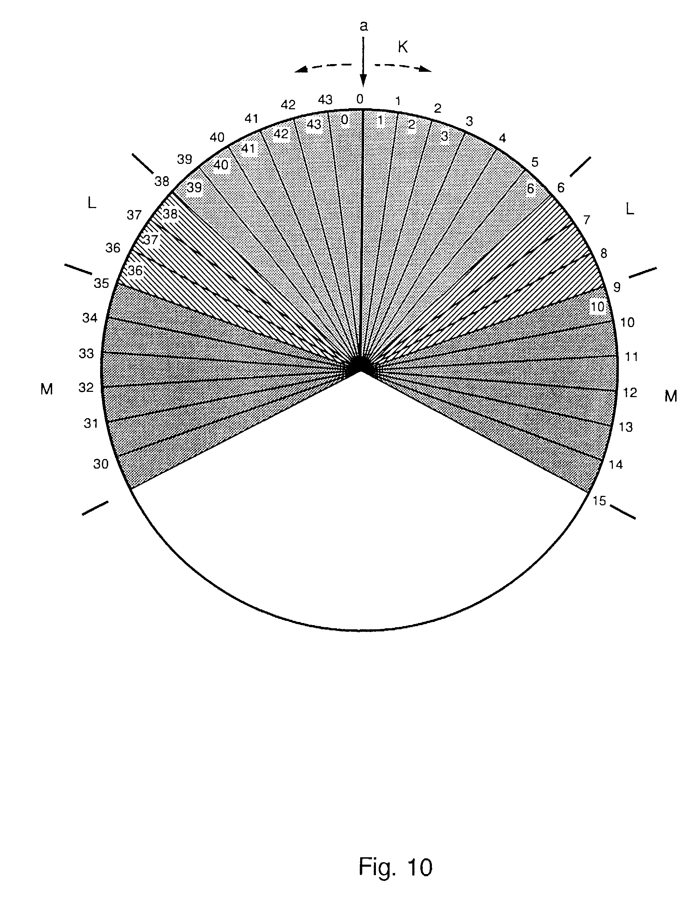

Figure 10 is a diagram which illustrates those addresses that the first reference address a can assume. The reference address a is equal to zero in its starting state. According to the illustrated embodiment, the reference address a can be permitted to vary by fifteen addresses in a forwards sense and fifteen addresses in a rearward sense in relation to the address zero. The deviation from the starting state should not be greater than said fifteen addresses, because otherwise there is a risk that a given write address WADR will be generated at the same time as the same read address RADR, since the generation of write addresses is displaced in the diagram in the same manner as the reference address a is displaced when changing the write-in rate. The reference addresses are divided into five different sectors in the Figure 10 illustration. The first sector K includes the addresses 39-6, i.e. those addresses proximal to the starting state. The second and the third sector L include the addresses 36-38 and 7-9. The deviation of the addresses in the L-sectors is further from the starting state than the addresses in the K-sector. The fourth and the fifth sectors M include the addresses 30-35 and 10-15. The addresses in the M-sectors deviate most from the starting state, when compared with the K-sectors and the L-sectors. The readjustment of the reference address a is effected at different speeds, depending on the sector in which the reference address is found. When the reference address a has a value within the K-sector, the readjustment is effected at a slower rate, meaning, for instance, that the reference address a is changed back towards the starting state at one-eighth of an address at a time, and each adjustment takes place relatively seldomly. On the other hand, if the reference address has a value within one of the L-sectors, the address is readjusted at a faster rate, for instance at a rate corresponding to one-eighth of an address at a time, but relatively often. Finally, when the reference address has a value within one of the M-sectors, readjustment is effected very quickly, so as to avoid the reference address from being located outside the limit addresses 15 and 30. In this case, the reference address can be readjusted in eighths of a step of addresses and very often. In order to readjust the reference address with sufficient speed, it is possible to readjust in greater steps than eighths of addresses, or even at a speed corresponding to one complete address in one step. The readjustment of the first reference address a is effected and controlled by the logic circuit LC.

It is preferred to use only the first reference address a for compensating for a change in the write-in rate, although it is also possible to use instead the second reference address c or to use both reference addresses a, c together for the purpose of compensation. Changes are made in the reference address c by connecting nine additional outputs 60 on the logic circuit to nine additional inputs 56 on the second comparitor KOMP2. In order to be able to make changes on parts of addresses, three modulo-8-bits are also transmitted to the second comparitor KOMP2 from the modulo-8-counter 91. The three bits that are received on three inputs 61 constitute the three least significant bits in the second comparison address d. When only the second reference address c is used for compensation, the address c is varied around the starting state in a manner which corresponds to the earlier described changes to the first reference address a. When both reference addresses a, c are used together to mask a change in the write-in rate, they are together changed by a total number of addresses which equals the change in the number of datainformation units in the incoming frame Dataᵢₙ. The readjustment may involve adjusting both reference addresses a, c alternately back to the starting state.

It will be understood that the invention is not restricted to the aforedescribed and illustrated exemplifying embodiments thereof. For instance, the invention can be applied in a context in which the number of data information units in a frame can vary in a way different to that described hitherto, for instance such that the data information units DATAINFOᵢₙ contain two or four more units than the nominal number, or two or four data information units DATAINFOᵢₙ less than the nominal number. Naturally, the other information OTHER must contain more than two bits in order to indicate this.

The invention can also be applied in contexts in which the number of data information units DATAINFOᵢₙ or predetermined changes in the rate at which write addresses are generated/delivered is detected in a manner different to that earlier described. When practicing the invention, it is important that the changes in the rate at which write addresses are delivered to the memory is of a predetermined nature and can be detected/determined in time for the initial compensation. Of course, purely random changes cannot be masked with an initial compensation according to the present invention.

Neither is the invention restricted to precisely the type of phase detector described, but can be applied together with other types of known phase detectors.

## Claims

1. A method for adapting the rate at which a cyclic sequence of read addresses (RADR) is delivered to a memory (FIFO) to the rate at which a cyclic sequence of write addresses (WADR) is delivered to said memory, wherein the sequence of write addresses is delivered at a rate which is changed intermittently, and wherein the rate at which the read addresses are delivered to the memory is adjusted in a manner such that the read addresses will be delivered to the memory, on average, at the same rate as that at which the write addresses are delivered to said memory, **characterized by**
- deriving a first comparison magnitude (x) from the write addresses, said first comparison magnitude (x) being related to the rate at which the write addresses are delivered to the memory,
- deriving a second comparison magnitude (y) from the read addresses, said second comparison magnitude (y) being related to the rate at which the read addresses are delivered to the memory,
- deducing a result (co) by comparing the first and the second comparison magnitudes,
- detecting a change in the rate at which the write addresses are delivered to the memory,
- activating a re-derivation of at least one of the comparison magnitudes (x, y) in a manner such that the result (co) is initially kept unchanged and successively reducing the influence of the re-derivation, and
- adjusting the rate at which the read addresses are delivered to the memory in accordance with the result (co).

2. A method according to Claim 1, in which the incoming datainformation to be written into the memory with the aid of the write addresses is divided in frames, wherein the frames also include other information which is not to be written into the memory, and wherein the amount of datainformation contained in a frame may coincide with or deviate from a nominal value, **characterized by** detecting whether or not the quantity of data information contained in a frame coincides with or deviates from the nominal value, therewith to detect the change in the rate at which write addresses are delivered to the memory.

3. A method according to Claim 1 or 2, **characterized by**
- deriving the first comparison magnitude (x) from the write addresses by forming a first reference address (a) which corresponds to a write address,
- comparing the write address (WADR) delivered to the memory (FIFO) with the first reference address, the result of said comparison forming the first comparison magnitude (x),
- deriving the second comparison magnitude (y) from the read addresses by forming a second reference address (c) which corresponds to a read address,
- comparing the read address (RADR) delivered to the memory (FIFO) with the second reference address, the result of said comparison forming the second comparison magnitude (y), wherein the reference addresses (a, c) in a starting state in the absence of said activation are formed with a mutual difference which corresponds generally to one-half cycle phase difference in a sequence of addresses, wherein said first comparison magnitude is comprised of a write signal pulse (xpls) which is generated when the write address is equal to the first reference address, and wherein said second comparison magnitude is comprised of a read signal pulse (ypls) which is generated when the read address is equal to the second reference address, whereby the pulses (xpls, ypls) are generated simultaneously when the phase shift between the read addresses and the simultaneous write addresses corresponds to the phase shift between the reference addresses, whereas said pulses are generated with a time shift when the phase shifts between delivered read addresses and the simultaneous write addresses differ from the phase shift between the first and the second reference addresses.

4. A method according to Claim 3, **characterized** in that the comparison between the first and the second comparison magnitudes (x, y) is effected by comparing when in time the write signal pulses and the read signal pulses (xpls, ypls) generated and adjusting the rate at which new read addresses (RADR) are delivered to the memory (FIFO) in accordance with the result (co) of the comparison, wherein the rate is increased when the write signal pulse (xpls) is generated prior to the read signal pulse (ypls), the rate is decreased when the write signal pulse is generated after the read signal pulse, and the rate is kept unchanged when the write signal pulse and the read signal pulse are generated simultaneously with one another.

5. A method according to Claim 3, **characterized** in that activation of the re-derivation of at least one of the comparison magnitudes in conjunction with a change in the rate at which the write addresses are delivered to the memory is effected initially by changing the first reference address (a) or the second reference address (c) or both reference addresses together (a, c) to a degree which corresponds to said change; and in that the activation of said re-derivation is reduced successively by adjusting the changed reference address or reference addresses incrementally in steps back to said starting state while said write signal pulse (xpls) and said read signal pulse (ypls) are generated with a time shift, so that the rate at which read addresses are delivered to the memory is adjusted to follow the changed rate at which write addresses are delivered to the memory.

6. An arrangement for adapting the rate at which a cyclic sequence of read addresses (RADR) is delivered to a memory (FIFO) to the rate at which a cyclic sequence of write addresses (WADR) is delivered to said memory, said sequence of write addresses being delivered at a rate which is changed intermittently, wherein the arrangement includes control means (PLL) for adjusting the rate at which the read addresses are delivered to the memory, so that the read addresses, on average, are delivered to the memory at the same. rate as the write addresses are delivered to said memory, **characterized by**
- first deriving means (KOMP1) for deriving a first comparison magnitude (x) from the write adresses, said first comparison magnitude (x) being related to the rate at which the write addresses are delivered to the memory,
- second deriving means (KOMP2) for deriving a second comparison magnitude (y) from the read adresses, said second comparison magnitude (y) being related to the rate at which the read addresses are delivered to the memory,
- first comparison means (PD) for deducing a result (co) by comparing the first and the second comparison magnitudes,
- detecting means (DM) for detecting a change in the rate at which the write addresses are delivered to the memory,
- activating means (LC) for activating a re-derivation of at least one of the comparison magnitudes (x, y) in a manner such that the result (co) is initially kept unchanged and successively reducing the influence of the re-derivation, and
- control means (PLL) for adjusting the rate at which the read addresses are delivered to the memory in accordance with the result (co).

7. An arrangement according to Claim 6, in which data information to be written into the memory with the aid of the write addresses occurs divided in frames, wherein said frames also include other information which shall not be written into the memory , **characterized** in that the detection means (DM) is arranged to detect the change in the rate at which write addresses are delivered to the memory by detecting whether or not the amount of data information in a frame coincides with the nominal value or deviates from said value.

8. An arrangement according to Claim 6 or 7, **characterized in that** the first deriving means (KOMP1) includes a first comparitor to which a first reference address (a) is delivered and to which there is also delivered the same write addresses (WADR) as those delivered to the memory (FIFO), wherein said comparitor is intended to compare the first reference address delivered thereto with the write addresses delivered thereto and to deliver said first comparison magnitude (x) in the form of a write signal pulse (xpls) when similarity is found between said reference address and said write addresses; in that said second driving means (KOMP2) includes a second comparitor to which there is delivered a second reference address (c) and the same read addresses (RADR) as those delivered to the memory (FIFO), said second comparitor functioning to compare the second reference address delivered thereto with the read addresses delivered thereto and to deliver said second comparison magnitude (y) in the form of a read signal pulse (ypls) when similarity is found between the second reference address and the read addresses.

9. An arrangement according to Claim 8, **characterized** in that the first comparison means includes a phase detector (PD) which receives the write signal pulse (xpls) on a first input and receives the read signal pulse (ypls) on a second input, said phase detector functioning to detect any time shift between a write signal pulse and a corresponding read signal pulse and to deliver on one output a control signal (co) which is dependent on a detected time shift; in that said control means (PLL) includes a voltage controlled oscillator (VCO) which receives said control signal (co) on one input and delivers on one output a signal having a frequency (f) which determines the rate at which read addresses are delivered to the memory; in that the voltage controlled oscillator (VCO) functions to increase the rate at which new read addresses are delivered to the memory (FIFO) when the write signal pulses are generated prior to the corresponding read signal pulses; in that the oscillator is intended to reduce said rate when the write signal pulses are generated after corresponding read signal pulses; and in that the oscillator is intended to maintain said rate unchanged when corresponding write signal pulses and read signal pulses are generated at one and the same time.

10. An arrangement according to Claim 8, **characterized** in that the activating means (LC) includes a logic circuit which, when detecting a change in the rate at which the write addresses are delivered, functions to compensate said change; in that the logic circuit is connected to the first comparitor (KOMP1) and is constructed to effect a change in the first reference address (a) corresponding to said change in the rate at which the write addresses are delivered, so as to initially compensate the whole of said change; and in that the logic circuit is constructed to remove the change in the reference address (a) in incremental steps, so that the compensation is successively reduced and ceases.

11. A method for transmitting data information from a synchronous digital hierarchy system (SDH) to a plesiochronous digital hierarchy system (PDH), said data information (DATAINFOᵢₙ) occurring divided on frames in the synchronous system, wherein the frames include units of data information (DATAINFOᵢₙ) to be transmitted to the PDH-system, and also units of other information which shall not be transmitted to the PDH-system, wherein the relationship between the number of data information units and the number of other information units may vary in each frame, depending on whether the frame includes a nominal number of data information units or more data information units than the nominal number or fewer data information units than the nominal number, and wherein the method includes the steps of writing data information (DATAINFOᵢₙ) from the synchronous system into an addressable memory (FIFO) and reading-out data information (DATAINFOₒᵤₜ) to the plesiochronous system from the addressable memory, and in which method a cyclic sequence of write addresses (WADR) is generated successively in a manner such that there is generated one write address for each unit of data information (DATAINFOᵢₙ) to be transmitted to the PDH-system, whereas the generation of write addresses is interrupted for each unit of other information, whereby a nominal number of write addresses are generated for each frame when a frame having a nominal number of data information units occurs in the synchronous system, and more write addresses than the nominal number of addresses are generated for each frame when the occurrent frame includes more data information units than said nominal number, and fewer write addresses than the nominal number of addresses are generated for each frame when the occurrent frame includes fewer data information units than the nominal number, wherein data information (DATAINFOᵢₙ) from the synchronous system is written into memory positions in the memory disclosed by the write addresses, wherein a cyclic sequence of read addresses (RADR) are generated, wherein the same memory addresses as the memory addresses included in the cyclic sequence of write addresses are included in the sequence of read addresses and in the same order as said memory addresses, wherein data information (DATAINFOₒᵤₜ) is read-out to the plesiochronous system from memory positions in the memory disclosed by the read addresses (RADR), wherein in a starting state, the read addresses are generated generally phase shifted through one-half of an address cycle from the simultaneously generated write addresses, so that data will not be written into and read from the memory simultaneously from one and the same memory position, and in which method the read addresses are generated, on average, at the same rate as the write addresses, **characterized** by
- forming a first reference address (a) which corresponds to a write address, and forming a second reference address (c) which corresponds to a read address, such that the mutual phase shift in the reference addresses (a, c) corresponds essentially to one-half of an address cycle in a starting state;
- generating a write signal pulse (xpls) when the write address (WADR) is equal to the first reference address (a), and generating a read signal pulse (ypls) when the read address (RADR) is equal to the second reference address (c), whereby said pulses (xpls, ypls) are generated mutually simultaneously when the phase shift between the read addresses and the write addresses correspond to the mutual phase shift of the reference addresses, whereas said pulses (xpls, ypls) are generated with a time shift when the phase shift between the read addresses and the write addresses differ from the phase shift between the reference addresses;
- delivering said pulses (xpls, ypls) to a frequency regulating circuit (PLL) which functions to adjust the rate at which new read addresses (RADR) are generated, wherein said rate is changed when the write signal pulse (xpls) and corresponding read signal pulse (ypls) are generated with a mutual time shift, and wherein the rate is unchanged when the write signal pulse (xpls) is generated at the same time as the read signal pulse (ypls);
- detecting when an occurrent frame contains more or more data information units (DATAINFOᵢₙ) than the nominal number;
- when detecting that a frame contains more or fewer data information units than the nominal number, masking corresponding generation of more or fewer write addresses (WADR) for said frame, by changing the first reference address (a) or the second reference address (c) or both reference addresses together (a, c) by as many reference addresses as the number corresponded by more or fewer data information units;
- adjusting the changed reference address or reference addresses (a, c) stepwise back to said starting state, wherein the write signal pulse (xpls) and the read signal pulse (ypls) are generated with a mutual time shift, so that the rate at which read addresses (RADR) are generated is changed to follow the change in the number of write addresses (WADR) generated for each frame which occurs with more or fewer data information units than is nominal in a frame, wherein said rate increases when the frame contains more information units and decreases when the frame contains fewer units than the nominal frame number.

12. A method according to Claim 11, **characterized** in that when detecting more data information units than the nominal number, it is also detected that one or more first spaces (H3) in the frame intended for transmitting more data information units than the nominal number contain data information, and when detecting fewer data information units than the nominal number, it is detected that one or more other spaces (0) in the frame do not contain data information and are not utilized for data information when transmitting fewer data information units than the nominal number.

13. A method according to Claim 11, **characterized** in that when the incoming frame includes fewer data information units (DATAINFOᵢₙ) than the nominal number, the corresponding generation of more write addresses is masked by changing the first reference address (a) forwards by as many reference addresses as the number of more data information units contained in the frame above said nominal number, and when the incoming frame includes fewer data information units (DATAINFOᵢₙ) than the nominal number, the corresponding generation of fewer write addresses is masked by changing the first reference address (a) backwards by as many reference addresses as the fewer number of data information units contained by the frame in relation to the nominal number.

14. A method according to Claim 13, **characterized** in that masking is effected in one step.

15. A method according to Claim 13, **characterized** by adjusting the first reference address (a) backwards towards the starting state subsequent to effecting said masking operation, wherein
- the deviation of the first reference address (a) from the starting state is measured; and
- the first reference address (a) is adjusted backwards to the starting state in incremental steps at a rate which becomes greater with increasing deviations of the first reference address from the starting state.

16. A method according to Claim 15, **characterized** in that said stepwise adjustment of the first reference address (a) back to the starting state is effected in parts of reference addresses.

17. An arrangement for transmitting data information from a synchronous digital hierarchy system (SDH) to a plesiochronous digital hierarchy system (PDH), said data information (DATAINFOᵢₙ) occurring divided on frames in the synchronous system, wherein the frames include units of data information (DATAINFOᵢₙ) to be transmitted to the PDH-system, and also units of other information which shall not be transmitted to the PDH-system, wherein the relationship between the number of data information units and the number of other information units in each frame may vary, depending on whether the frame includes a nominal number of data information units or more data information units than the nominal number or fewer data information units than the nominal number, and in which arrangement data information (DATAI-NFOᵢₙ) from the synchronous system is written into the addressable memory (FIFO) and data information (DATAINFOₒᵤₜ) is read-out to the plesiochronous system from the addressable memory, and which arrangement includes write address generator (WADRGEN) for generating a cyclic sequence of write addresses (WADR) such as to generate one write address for each unit of data information (DATAINFOᵢₙ) to be transmitted to the PDH-system, whereas the generation of write addresses is interrupted for each unit of other information, whereby a nominal number of write addresses is generated for each frame when a frame having a nominal number of data information units occurs in the synchronous system, and more write addresses than the nominal number of addresses are generated for each frame when the occurrent frame includes more data information units than said nominal number, and fewer write addresses than the nominal number of addresses are generated for each frame when the occurrent frame includes fewer data information units than the nominal number, wherein data information (DATAINFOᵢₙ) from the synchronous system is written into memory positions in the memory disclosed by the write addresses, wherein the arrangement further includes a read address generator (RADRGEN) for generating a cyclic sequence of read addresses (RADR), wherein the same memory addresses as the memory addresses included in the cyclic sequence of write addresses are included in the sequence of read addresses and in the same order as said memory addresses, wherein data information (DATAINFOₒᵤₜ) is read-out to the plesiochronous system from memory positions in the memory disclosed by the read addresses (RADR), wherein in a starting state the read addresses are generated generally phase shifted through one-half of an address cycle from the simultaneously generated write addresses, so that data will not be written into and read from the memory simultaneously from one and the same memory position, and in which arrangement the read addresses are generated, on average, at the same rate as the write addresses, **characterized** in that the arrangement also includes
- a first comparison means (KOMP1) for making a comparison between a first reference address (a) and generated write addresses (WADR), wherein a write signal pulse (xpls) is delivered on an output when the write address is the same as the first reference address;
- a second comparison means (KOMP2) for making a comparison between a second reference address (c) and generated read addresses (RADR), wherein a read signal pulse (ypls) is delivered on an output when the read address is the same as the second reference address;
- a frequency regulating circuit (PLL), having an output connected to said read address generator (RADRGEN) for adjusting the counting rate at which read addresses are generated, receives the write signal pulse (xpls) on a first input and the read signal pulse (ypls) on a second input, wherein the counter rate is adjusted when the write signal pulse (xpls) and the read signal pulse (ypls) are received with a mutual time shift, whereas the counter rate remains unchanged when the write signal pulse and the read signal pulse are received simultaneously;
- a logic circuit (LC) which is coupled to control the first reference address (a) or is coupled to control the second reference address (c) or is coupled to control both the first reference address (a) and the second reference address (c) simultaneously, wherein the reference addresses in a starting state have a mutual phase shift which corresponds to one-half of an address cycle, wherein said write signal pulse (xpls) and said read signal pulse (ypls) are delivered simultaneously when the phase shift between generated write addresses and simultaneously generated read addresses correspond to the phase shift between said first and said second reference address;
- a detection circuit (DM) for detecting more or fewer data information units (DATAINFOᵢₙ) than the nominal number of data information units in an incoming frame, wherein the detection circuit (DM) has an output connected to an input on said logic circuit (LC) for delivering a detection signal (DET) to the logic circuit (LC) when detecting more or fewer data information units than the nominal number, wherein corresponding generation of more or fewer write addresses is masked for the frequency regulating circuit, by changing in one step the first reference address (a) or the second reference address (c) or both reference addresses (a, c) together by as many reference addresses which correspond to the number of more or fewer data information units in said frame, whereafter the changed reference address or reference addresses (a, c) are adjusted in stepped increments back to said starting state while the write signal pulse (xpls) and the read signal pulse (ypls) are generated mutually shifted in time, such that the counter rate at which read addresses (RADR) are generated is changed in a manner to follow the change in the generation of write addresses (WADR) which occurs when the incoming frame contains more or fewer data information units than the nominal number, and wherein the frequency regulating circuit (PLL) increases the counter rate as a result of detecting more data information units than the nominal number in a frame, and decreases the counter rate as a result of detecting fewer data information units in the incoming frame than the nominal number.

18. An arrangement according to Claim 17, **characterized** in that the frequency regulating circuit (PLL) includes a phase-locking circuit having a phase detector (PD) for detecting the mutual time shift of the write signal pulse (xpls) and the read signal pulse (ypls), wherein the phase detector (PD) delivers a control signal (co) which depends on the detected time shift, and further includes a voltage controlled oscillator circuit (VCO) which receives the control signal (co) and adjusts the frequency of a clock signal (cl) in response to the received control signal (co), and a counter (91) which receives the clock signal (cl) and which delivers read-clock pulses (RCLP) to the read address generator (RADRGEN), wherein the read clock pulses are delivered at a frequency which depends on the mutual time shift between the write signal pulse and the read signal pulse, and wherein the counter rate in the read address generator varies with the frequency of the read clock pulses.

19. An arrangement according to Claim 17, **characterized** in that the first and the second comparison means (KOMP1, KOMP2) are comparitors.

20. An arrangement according to Claim 17, **characterized** in that the logic circuit (LC) functions to change the first reference address (a) in a forward sense when detecting more data information units in an incoming frame than the nominal number of said units, wherein the reference address is changed in a forward sense by as many reference addresses as the additional number of data information units above said nominal number, and wherein the logic circuit functions to change the first reference address (a) in a backward sense when detecting fewer data information units, and wherein the reference address is changed in a backward sense by as many reference addresses as the fewer number of data information units; and in that the logic circuit (LC) also functions to adjust the first reference address (a) back to the starting state in incremental steps such that the number of steps and the time period between said steps is dependent on the extent to which the first reference address (a) has been changed from said starting state, wherein said adjustment is effected with large steps or at short time intervals between the steps when the reference address deviates to a great extent from said starting state, and is effected in small steps and with long time intervals between said steps when the reference address deviates from said starting state by only a small extent.

## Patentansprüche

1. Verfahren zum Angleichen der Rate mit der eine zyklische Folge von Leseadressen (RADR) an einen Speicher (FIFO) abgegeben wird, und zwar an die Rate, mit der eine zyklische Folge von Schreibadressen (WADR) an den Speicher abgegeben wird, derart, daß die Folge der Schreibadressen mit einer Rate abgegeben wird, die zwischenzeitlich geändert ist, und daß die Rate, mit der die Leseadressen an den Speicher abgegeben wird, so angeglichen wird, daß - im Durchschnitt - die Leseadressen an den Speicher mit derselben Rate wie derjenigen abgegeben werden, mit der Schreibadressen an den Speicher abgegeben werden, **gekennzeichnet durch** die Schritte:
- Ableiten einer ersten Vergleichsgröße (x) von der Schreibadresse, derart, daß die erste Vergleichsgröße (x) im Zusammenhang mit der Rate steht, mit der Schreibadressen an den Speicher abgegeben werden,
- Ableiten einer zweiten Vergleichsgröße (y) aus den Leseadressen, derart, daß die zweite Vergleichsgröße (y) im Zusammenhang mit der Rate steht, mit der Leseadressen an den Speicher abgegeben werden,
- Ableiten eines Ergebnisses (co) durch Vergleich der ersten und zweiten Vergleichsgröße,
- Detektieren einer Änderung der Rate, mit der Schreibadressen an den Speicher abgegeben werden,
- Aktivieren einer erneuten Ableitung mindestens einer der Vergleichsgrößen (x, y) derart, daß das Ergebnis (co) anfänglich unverändert gehalten wird und nachfolgend der Einfluß der erneuten Ableitung reduziert wird, und
- Angleichen der Rate, mit der Leseadresse an den Speicher in Übereinstimmung mit dem Ergebnis (co) abgegeben werden.

2. Verfahren nach Anspruch 1, bei dem die ankommende Dateninformation, die in den Speicher mit Hilfe der Schreibadressen zu schreiben ist, in Rahmen unterteilt wird, derart, daß die Rahmen auch andere Information enthalten, die nicht in den Speicher zu schreiben ist, und derart, daß der Umfang der Dateninformation in dem Rahmen mit einem Nennwert übereinstimmen kann oder von diesem abweichen kann, **gekennzeichnet** durch das Detektieren der Tatsache, ob der Umfang der Dateninformation, der in einem Rahmen enthalten ist, mit dem Nennwert übereinstimmt oder von dem Nennwert abweicht, um hierdurch die Änderung der Rate zu detektieren, mit der Schreibadressen an den Speicher abzugeben sind.

3. Verfahren nach Anspruch 1 oder 2, **gekennzeichnet** durch die Schritte:
- Ableiten der ersten Vergleichsgröße (x) aus den Schreibadressen durch Bilden einer ersten Referenzadresse (a), die einer Schreibadresse zugeordnet ist,
- Vergleichen der Schreibadresse (WADR), die an en Speicher (FIFO) abgegeben wird, mit der ersten Referenzadresse, derart, daß das Vergleichsergebnis die erste Vergleichsgröße (x) bildet,
- Ableiten der zweiten Vergleichsgröße (y) aus den Leseadressen durch Bilden einer zweiten Referenzadresse (c), die einer Leseadresse zugeordnet ist,
- Vergleich der Leseadresse (RADR), die an den Speicher (FIFO) abgegeben wird, mit der zweiten Referenzadresse, derart, daß das Vergleichsergebnis die zweite Vergleichsgröße (y) bildet, derart, daß die Referenzadressen (a, c) in einem Startzustand bei Nichtvorliegen der Aktivierung mit einer wechselseitigen Referenz gebildet werden, die allgemein eine Hälfte der zyklischen Phasendifferenz in einer Folge der Adressen übereinstimmt, derart, daß die erste Vergleichsgröße aus einem Schreibsignalpuls (xpls) besteht, der dann erzeugt wird, wenn die Schreibadresse gleich der ersten Referenzadresse ist, und derart, daß die zweite Vergleichsgröße aus einem Lesesignalpuls (ypls) besteht, der erzeugt wird, wenn die Leseadresse gleich der zweiten Referenzadresse ist, wodurch die Pulse (xpls, ypls) gleichzeitig dann erzeugt werden, wenn die Phasenverschiebung zwischen den Leseadressen und den gleichzeitig vorliegenden Schreibadressen mit der Phasenverschiebung zwischen den Referenzadressen übereinstimmt, wodurch die Pulse mit einer Zeitverschiebung dann erzeugt werden, wenn sich die Phasenverschiebungen zwischen abgegebenen Leseadressen und den gleichzeitig erzeugten Schreibadressen gegenüber der Phasenverschiebung zwischen der ersten und zweiten Referenzadresse unterscheiden.

4. Verfahren nach Anspruch 3, **dadurch gekennzeichnet, daß** der Vergleich zwischen der ersten und zweiten Vergleichsgröße (x, y) bewirkt wird, indem ein zeitlicher Vergleich der erzeugten Schreibsignalpulse und Lesesignalpulse (xpls, ypls) durchgeführt wird und die Rate angeglichen wird, mit der neue Leseadressen (RADR) an den Speicher (FIFO) abgegeben werden, in Übereinstimmung mit dem Ergebnis (co) des Vergleichs, derart, daß die Rate dann erhöht wird, wenn der Schreibsignalpuls (xpls), vor dem Lesesignalpulse (ypls) erzeugt wird, und die Rate dann verringert wird, wenn der Schreibsignalpuls nach dem Lesesignalpuls erzeugt wird, und die Rate unverändert dann beibehalten wird, wenn der Schreibsignalpuls und der Lesesignalpuls gleichzeitig zueinander erzeugt werden.

5. Verfahren nach Anspruch 3, **dadurch gekennzeichnet, daß** das Aktivieren der erneuten Ableitung mindestens einer Vergleichsgröße im Zusammenhang mit einer Änderung der Rate, mit der Schreibadressen an den Speicher abgegeben werden, anfänglich bewirkt wird, indem die erste Referenzadresse (a) oder die zweite Referenzadresse (c) oder beide Referenzadressen zusammen (a, c) in einem Umfang verändert werden, der mit der Änderung übereinstimmt; und daß die Aktivierung der erneuten Ableitung sukzessive reduziert wird, indem die geänderte Referenzadresse oder die geänderten Referenzadressen inkrementell stufenweise zu dem Startzustand rückgeführt werden, während der Schreibsignalpuls (xpls) und der Lesesignalpuls (ypls) mit einer Zeitverschiebung erzeugt werden, derart, daß die Rate, mit der Leseadressen an den Speicher abgegeben werden, so angeglichen ist, daß sie der Änderungsrate folgt, mit der Schreibadressen an den Speicher abgegeben werden.

6. Anordnung zum Angleichen der Rate, mit der eine zyklische Folge von Leseadressen (RADR) an einen Speicher (FIFO) abgegeben wird, an der Rate, mit der eine zyklische Folge von Schreibadressen (WADR) an den Speicher abgegeben wird, derart, daß die Folge der Schreibadressen mit einer Rate abgegeben wird, die sich zwischenzeitlich ändert, und derart, daß die Anordnung eine Steuervorrichtung (PLL) zum Angleichen der Rate enthält, mit der die Leseadressen an den Speicher abgegeben werden, so daß die Leseadressen im Durchschnitt an den Speicher mit derselben Rate abgegeben werden, wie die Schreibadressen an den Speicher abgegeben werden, **gekennzeichnet durch**
- eine erste Ableitvorrichtung (KOMP1) zum Ableiten einer ersten Vergleichsgröße (x) anhand der Schreibadressen, derart, daß die erste Vergleichsgröße (x) im Zusammenhang mit der Rate steht, mit der die Schreibadressen an den Speicher abgegeben werden,
- eine zweite Ableitvorrichtung (KOMP2), zum Ableiten einer zweiten Vergleichsgröße (y) anhand der Leseadressen, derart, daß die zweite Vergleichsgröße (y) im Zusammenhang mit der Rate steht, mit der die Leseadressen an den Speicher abgegeben werden,
- eine erste Vergleichsvorrichtung (PD) zum Ableiten eines Ergebnisses (co) durch Vergleich der ersten und zweiten Vergleichsgröße,
- eine Detektorvorrichtung (DM) zum Detektieren einer Änderung der Rate, mit der Schreibadressen an den Speicher abgegeben werden,
- eine Aktivierungsvorrichtung (LC) zum Aktivieren eines erneuten Ableitens mindestens einer Vergleichsgröße (x, y) derart, daß das Ergebnis (co) anfänglich unverändert gehalten wird und sukzessive der Einfluß des erneuten Ableitens reduziert ist, und
- eine Steuervorrichtung (PLL) zum Anglichen der Rate, mit der die Adressen an den Speicher abgegeben werden, in Übereinstimmung mit dem Ergebnis (co).

7. Anordnung nach Anspruch 6, bei der Dateninformation, die in den Speicher mit Hilfe der Schreibadressen zu schreiben ist, in Rahmen unterteilt auftritt, derart, daß die Rahmen auch andere Information enthalten, die nicht in den Speicher zu schreiben ist, **dadurch gekennzeichnet, daß** die Detektionsvorrichtung (DM) zum Detektieren der Änderung der Rate ausgebildet ist, mit der Schreibadressen an Speicher abgegeben werden, durch Detektieren der Tatsache, ob der Umfang der Dateninformation in einem Rahmen mit dem Nennwert übereinstimmt oder nicht oder ob er von dem Wert abweicht.

8. Anordnung nach Anspruch 6 oder 7, **dadurch gekennzeichnet, daß** die erste Ableitvorrichtung (KOMP1) einen ersten Komparator enthält, an dem eine erste Referenzadresse (a) abgegeben wird und an dem auch die gleichen Schreibadressen (WADR) abgegeben werden, wie sie an den Speicher (FIFO) abgegeben werden, derart, daß der Komparator zum Vergleichen der ersten hierin abgegebenen Referenzadresse mit den hierin abgegebenen Schreibadressen gedacht ist, sowie zum Abgeben der ersten Vergleichsgröße (x) in der Form eines Schreibsignalpulse (xpls), wenn eine Übereinstimmung mit der Referenzadresse und den Schreibadressen festgestellt wird; und daß die zweite Ableitvorrichtung (KOMP2) einen zweiten Komparator enthält, an dem eine zweite Referenzadresse (c) abgegeben wird und dieselben Leseadressen (RADR), wie sie an den Speicher (FIFO) abgegeben werden, derart, daß der zweite Komparator funktionsgemäß die zweite hierin abgegebene Referenzadresse mit den hierin angegebenen Leseadressen vergleicht und die zweite Vergleichsgröße (y) in der Form eines Lesesignalpulses (ypls) dann abgibt, wenn eine Übereinstimmung zwischen der zweiten Referenzadresse und den Leseadressen festgestellt wird.

9. Anordnung nach Anspruch 8, **dadurch gekennzeichnet, daß** die erste Vergleichsvorrichtung einen Phasendetektor (PD) enthält, der den Schreibsignalpuls (xpls) an einem ersten Eingang empfängt und der den Lesesignalpuls (ypls) an einem zweiten Eingang empfängt, derart, daß der Phasendetektor funktionsgemäß gemäß der Zeitverschiebung zwischen einem Schreibsignalpuls und einem zugeordneten Lesesignalpulse detektiert und an einen Ausgang ein Steuersignal (co) abgibt, das von einer detektierten Zeitverschiebung abhängt; und daß die Steuervorrichtung (PLL) einen spannungsgesteuerten Oszillator (VCO) enthält, der das Steuersignal (co) an einem Eingang empfängt und an einem Ausgang ein Signal mit einer Frequenz (f) abgibt, die die Rate bestimmt, mit der Leseadressen an den Speicher abgegeben werden; und daß der spannungsgesteuerte Oszillator (VCO) funktionsgemäß die Rate erhöht, mit der neue Leseadressen an den Speicher (FIFO) abgegeben werden, wenn die Schreibsignalpulse vor den zugeordneten Lesesignalpulsen erzeugt werden; und daß der Oszillator zum Reduzieren der Rate dient, wenn die Schreibsignalpulse nach den zugeordneten Lesesignalpulsen erzeugt werden; und daß der Oszillator zum unveränderten Halten der Rate dann dient, wenn zugeordnete Schreibsignalpulse und Lesesignalpulse zu ein und derselben Zeit erzeugt werden.

10. Anordnung nach Anspruch 8, **dadurch gekennzeichnet, daß** die Aktivierungsvorrichtung (LC) eine Logikschaltung enthält, die bei Detektion einer Änderung der Rate, mit der Schreibadressen abgegeben werden, funktionsgemäß die Änderung kompensiert; und daß die Logikschaltung mit dem ersten Komparator (KOMP1) verbunden ist und zum Bewirken einer Änderung der ersten Referenzadresse (a) in Übereinstimmung mit der Änderung der Rate, mit der Schreibadressen abgegeben werden, aufgebaut ist, derart, daß anfänglich eine Kompensierung der gesamten Änderung erfolgt; und daß die Logikschaltung zum Entfernen der Änderung der Referenzadresse (a) in inkrementellen Schritten aufgebaut ist, derart, daß die Kompensierung sukzessive reduziert wird und verschwindet.

11. Verfahren zum Übertragen von Dateninformation von einem synchronen digitalen hierarchischen System (SDH) an ein plesiochones, digitales, hierarchisches System (PDH), derart, daß Dateninformation (DATAINFOᵢₙ) unter Aufteilung auf Rahmen in dem synchronen System auftritt, und die Rahmeneinheiten der Dateninformation (DATAINFOᵢₙ) enthalten, die an das PDH-System zu übertragen sind und ebenfalls Einheiten anderer Information, die nicht an das PDH-System zu übertragen ist, ferner derart, daß die Beziehung zwischen der Zahl der Dateninformationseinheiten und der Zahl der anderen Informationseinheiten in jedem Rahmen variieren kann, und zwar in Übereinstimmung mit der Tatsache, ob der Rahmen einen Nennwert der Dateninformationseinheiten enthält oder mehr Dateninformationseinheiten als der Nennwert oder weniger Dateninformationseinheiten als der Nennwert und ferner derart, daß das Verfahren die Schritte zum Schreiben der Dateninformation (DATAINFOᵢₙ) aus dem synchronen System an einen adressierbaren Speicher (FIFO) enthält, sowie zum Auslesen der Dateninformation (DATAINFOₒᵤₜ) an das plesiochrone System ausgehend von dem adressierbaren Speicher, und daß in dem Verfahren eine zyklische Folge von Schreibadressen (WADR) sukzessive in einer Weise erzeugt wird, daß eine Schreibadresse für jede Einheit der an das PDH-System zu übertragenden Dateninformation (DATAINFOᵢₙ) erzeugt wird, wohingehend die Erzeugung der Schreibadressen für jede Einheit der anderen Information unterbrochen wird, wodurch ein Nennwert der Schreibadressen für jeden Rahmen dann erzeugt wird, wenn ein Rahmen mit einem Nennwert der Dateninformationseinheiten in dem synchronen System auftritt, und mehr Schreibadressen als der Nennwert der Adressen für jeden Rahmen dann erzeugt werden, wenn der auftretende Rahmen mehr Dateninformationseinheiten als der Nennwert enthält, und weniger Schreibadressen als der Nennwert der Adressen für jeden Rahmen dann erzeugt werden, wenn der auftretende Rahmen weniger Dateninformationseinheiten als der Nennwert enthält, derart, daß Dateninformation (DATAINFOᵢₙ) von dem synchronen System in die Speicherpositionen in dem Speicher geschrieben werden, die durch die Schreibadressen bezeichnet sind, daß eine zyklische Folge der Leseadressen (RADR) erzeugt wird, daß dieselben Speicheradressen, wie die in der zyklischen Folge der Schreibadressen enthaltenen Speicheradressen, in der Folge der Leseadressen in derselben Folge wie die Speicheradressen enthalten ist, daß Dateninformation (DATAINFOₒᵤₜ) zu dem plesiochronen System ausgehend von den Speicherpositionen in dem Speicher ausgelesen werden, die durch die Leseadressen (RADR) bezeichnet sind, daß in einem Startzustand die Leseadressen allgemein um eine Hälfte eines Adreßzyklus gegenüber den gleichzeitig erzeugten Schreibadressen erzeugt werden, so daß Daten nicht gleichzeitig in/aus ein und derselben Speicherposition geschrieben und gelesen werden, und daß bei den Verfahren die Leseadressen - im Durchschnitt - mit derselben Rate wie die Schreibadressen erzeugt werden, **gekennzeichnet durch**
- Bilden einer ersten Referenzadresse (a), die einer Schreibadresse zugeordnet ist, und Bilden einer zweiten Referenzadresse (c), die einer Leseadresse zugeordnet ist, derart, daß die wechselseitige Phasenverschiebung der Referenzadressen (a, c) im wesentlichen mit einer Hälfte eines Adreßzyklus in einem Startzustand übereinstimmt;
- Erzeugen eines Schreibsignalpulses (xpls) dann, wenn die Schreibadresse (WADR) gleich der ersten Referenzadresse (a) ist, und Erzeugen eines Lesesignalpulses (ypls) dann, wenn die Leseadresse (RADR) gleich der zweiten Referenzadresse (c) ist, wodurch die Pulse (xpls, ypls) wechselseitig gleichzeitig dann erzeugt werden, wenn die Phasenverschiebung zwischen den Leseadressen und den Schreibadressen in Übereinstimmung mit der wechselseitigen Phasenverschiebung der Referenzadressen vorliegt, wodurch die Pulse (xpls, ypls) mit einer Zeitverschiebung dann erzeugt werden, wenn die Phasenverschiebung zwischen den Leseadressen und den Schreibadressen sich von der Phasenverschiebung zwischen den Referenzadressen unterscheidet;
- Abgeben der Pulse (xpls, ypls) an eine Frequenzregelschaltung (PLL), die funktionsgemäß die Rate angleicht, mit der neue Leseadressen (RADR) erzeugt werden, derart, daß die Rate dann verändert wird, wenn der Schreibsignalpuls (xpls) und der zugeordnete Lesesignalpuls (ypls) mit wechselseitiger Zeitverschiebung erzeugt werden, und daß die Rate unverändert dann bleibt, wenn der Schreibsignalpuls (xpls) zur selben Zeit wie der Lesesignalpuls (ypls) erzeugt wird;
- Detektieren des Zeitpunkts, zu dem ein auftretender Rahmen mehr oder mehr Dateninformationseinheiten (DATAINFOᵢₙ) als der Nennwert enthält;
- bei Detektieren der Tatsache, daß ein Rahmen mehr oder weniger Dateninformationseinheiten als der Nennwert aufweist, Maskieren der zugeordneten Erzeugung mehrerer oder weniger Schreibadressen (WADR) für den Rahmen durch Ändern der ersten Referenzadresse (a) oder der zweiten Referenzadresse (a, c) oder beider Referenzadressen zusammen (c) gemäß so vielen Referenzadressen wie der Zahl in Übereinstimmung der mehrerer oder weniger Dateninformationseinheiten;
- Angleichen der veränderten Referenzadresse oder Referenzadressen (a, c) stufenweise zurück zu dem Startzustand, derart, daß der Schreibsignalpuls (xpls) und der Lesesignalpuls (ypls) mit wechselseitiger Zeitverschiebung so erzeugt werden, daß die Rate, mit der Leseadressen (RADR) erzeugt werden, verändert ist, damit ein Nachführen erfolgt, und zwar zu der Änderung der Zahl der Schreibadressen (WADR), die für jeden Rahmen erzeugt werden, der mit mehr oder weniger Dateninformationseinheiten als die Nenngröße in einem Rahmen auftritt, derart, daß die Rate dann zunimmt, wenn der Rahmen mehr Informationseinheiten enthält, und sie abnimmt, wenn der Rahmen weniger Einheiten als der Nennrahmenwert aufweist.

12. Verfahren nach Anspruch 11, **dadurch gekennzeichnet, daß** bei Detektion mehrerer Dateninformationseinheiten als der Nennwert ebenfalls detektiert wird, daß ein oder mehrere erste Leerstellen (H3) in dem Rahmen vorliegen, mit der Absicht zum Übertragen mehrerer Dateninformationseinheiten als dem Nennwert zugeordnete Dateninformation, und daß bei Detektieren weniger Dateninformationseinheiten als der Nennwert detektiert wird, daß einer oder mehrere Leerstellen (0) in dem Rahmen keine Dateninformation enthalten und nicht für Dateninformation eingesetzt werden, wenn weniger Dateninformationseinheiten als der Nennwert übertragen werden.

13. Verfahren nach Anspruch 11, **dadurch gekennzeichnet, daß** dann, wenn der ankommende Rahmen weniger Dateninformationseinheiten (DATAINFOᵢₙ) als der Nennwert enthält, die zugeordnete Erzeugung mehrerer Schreibadressen durch Ändern der ersten Referenzadresse (a) in Vorwärtsrichtung maskiert wird, und zwar um so viele Referenzadressen, wie der Zahl der mehreren Dateninformationseinheiten in dem Rahmen oberhalb dem Nennwert, und dann, wenn der ankommende Rahmen weniger Dateninformationseinheiten DATAINFOᵢₙ) als der Nennwert enthält, die zugeordnete Erzeugung von weniger Schreibadressen durch Ändern der ersten Referenzadresse (a) in Rückwärtsrichtung maskiert wird, und zwar um so viele Referenzadressen wie die geringere Zahl der Dateninformationseinheiten in dem Rahmen in Bezug zu dem Nennwert.

14. Verfahren nach Anspruch 13, **dadurch gekennzeichnet, daß** das Maskieren in einem Schritt bewirkt wird.

15. Verfahren nach Anspruch 13, **dadurch gekennzeichnet, daß** die erste Referenzadresse (a) in Rückwärtsrichtung zu dem Startzustand nach dem Bewirken des Maskierungsbetriebs angeglichen wird, derart, daß
- das Abweichen der ersten Referenzadresse (a) gegenüber dem Startzustand gemessen wird; und
- die erste Referenzadresse (a) in Rückwärtsrichtung an den Startzustand in inkrementellen Schritten in einer Rate angeglichen wird, die mit zunehmenden Abweichungen der ersten Referenzadresse von dem Startzustand größer wird.

16. Verfahren nach Anspruch 15, **dadurch gekennzeichnet, daß** das stufenweise Angleichen der ersten Referenzadresse (a) in Rückwärtsrichtung zu dem Startzustand in Teilen der Referenzadresse bewirkt wird.

17. Anordnung zum Übertragen von Dateninformation von einem synchronen, digitalen, hierarchischen System (SDH) an ein plesiochrones, digitales, hierarchisches System (PDH), derart, daß Dateninformation (DATAINFOᵢₙ) unter Aufteilung auf Rahmen in dem synchronen System auftritt, daß die Rahmeneinheiten der Dateninformation (DATAINFOᵢₙ) enthalten, die zu dem PDH-System zu übertragen sind, und ebenfalls Einheiten anderer Information, die nicht zu dem PDH-System zu übertragen sind, daß die Beziehung zwischen der Zahl der Dateninformationseinheiten und der Zahl der anderen Informationseinheiten in jedem Rahmen variiert, in Übereinstimmung mit der Tatsache, ob der Rahmen einen Nennwert der Dateninformationseinheiten enthält, oder mehr Dateninformationseinheiten aus dem Nennwert oder weniger Dateninformationseinheiten aus dem Nennwert, und daß bei der Anordnung Dateninformation (DATAINFOᵢₙ) von dem synchronen System in den adressierbaren Speicher (FIFO) geschrieben wird und Dateninformation (DATAINFOₒᵤₜ) zu dem plesiochronen System ausgehend von dem adressierbaren Speicher ausgelesen wird, und daß die Anordnung einen Schreibadreßgenerator (WADRGEN) zum Erzeugen einer zyklischen Abfolge von Schreibadressen (WADR) enthält, damit eine Schreibadresse für jede Einheit der zu den PDH-System zu übertragenden Dateninformation (DATAINFOᵢₙ) erzeugt wird, wohingehend die Erzeugung der Schreibadressen für jede Einheit der anderen Information unterbrochen ist, wodurch ein Nennwert der Schreibadressen für jeden Rahmen dann erzeugt wird, wenn ein Rahmen mit einem Nennwert der Dateninformationseinheiten in dem synchronen System auftritt, damit mehr Schreibadressen als der Nennwert der Adressen für jeden Rahmen dann erzeugt werden, wenn der auftretende Rahmen mehr Dateninformationseinheiten als der Nennwert enthält, und weniger Schreibadressen als der Nennwert der Adressen für jeden Rahmen dann erzeugt werden, wenn der auftretende Rahmen weniger Dateninformationseinheiten als der Nennwert enthält, derart, daß Dateninformation (DATAINFOᵢₙ) von dem synchronen System in die Speicherpositionen in dem Speicher geschrieben werden, die durch die Schreibadresse bezeichnet sind, daß die Anordnung ferner einen Leseadreßgenerator (RADRGEN) zum Erzeugen einer zyklischen Folge der Leseadressen (RADR) enthält, derart, daß dieselben Adressen wie die Schreibadressen, die in der zyklischen Folge der Schreibadressen enthalten sind, in der Folge der Leseadressen enthalten sind, sowie in derselben Folge wie die Speicheradressen, daß Dateninformation (DATAINFOₒᵤₜ) zu dem plesiochronen System ausgehend von den Speicherpositionen in dem Speicher ausgelesen wird, die durch die Leseadressen (RADR) bezeichnet sind, in einem Startzustand die Leseadressen allgemein um eine Hälfte eines Adreßzyklus gegenüber den gleichzeitig erzeugten Schreibadressen phasenverschoben erzeugt werden, so daß Daten nicht gleichzeitig in/aus derselben Speicherposition geschrieben/gelesen werden, und in der Anordnung (im Durchschnitt) die Leseadressen mit derselben Rate wie die Schreibadressen erzeugt werden, **dadurch gekennzeichnet, daß** die Anordnung ebenfalls enthält:
- eine erste Vergleichsvorrichtung (KOMP1) zum Durchführen eines Vergleichs zwischen einer ersten Referenzadresse (a) und erzeugten Schreibadressen (WADR), derart, daß ein Schreibsignalpuls (xpls) an einem Ausgang dann ausgegeben wird, wenn die Schreibadresse die gleiche wie die erste Referenzadresse ist;
- eine zweite Vergleichsvorrichtung (KOMP2) zum Durchführen eines Vergleichs zwischen einer zweiten Referenzadresse (c) und erzeugten Leseadressen (RADR) derart, daß ein Lesesignalpuls (ypls) an einem Ausgang dann ausgegeben wird, wenn die Leseadresse die gleiche wie die zweite Referenzadresse ist;
- eine Frequenzreguliervorrichtung (PLL) mit einem Ausgang, der an dem Leseadreßgenerator (RADRGEN) angeschlossen ist, zum Angleichen der Zählrate, mit der Leseadressen erzeugt werden, der ferner den Schreibsignalpuls (xpls) an einem ersten Eingang und den Lesesignalpuls (ypls) an einem zweiten Eingang empfängt, derart, daß die Zählrate dann angeglichen wird, wenn der Schreibsignalpuls (xpls) und der Lesesignalpuls (ypls) mit wechselseitiger Zeitverschiebung empfangen werden, wohingehend die Zählrate unverändert dann bleibt, wenn der Schreibsignalpuls und der Lesesignalpuls gleichzeitig empfangen werden;
- eine Logikschaltung (LC) die zum Steuern der ersten Referenzadresse (a) gekoppelt ist, oder zum Steuern der zweiten Referenzadresse (c) gekoppelt ist, oder zum gleichzeitigen Steuern sowohl der ersten Referenzadresse (a) als auch der zweiten Referenzadresse (c) gekoppelt ist, derart, daß die Referenzadressen in einem Startzustand eine wechselseitige Phasenverschiebung aufweisen, die mit einer Hälfte eines Adreßzyklus übereinstimmt, daß der Schreibsignalpuls (xpls) und der Lesesignalpuls (ypls) gleichzeitig dann abgegeben werden, wenn zwischen erzeugten Schreibadressen und gleichzeitig erzeugten Leseadressen vorliegende Phasenverschiebung mit der Phasenverschiebung zwischen der ersten und zweiten Referenzadresse übereinstimmt;
- eine Detektionsschaltung (DM) zum Detektieren mehr oder weniger Dateninformationseinheiten (DATAINFOᵢₙ) als der Nennwert der Dateninformationseinheiten bei einem ankommenden Rahmen, derart, daß die Detektionsschaltung (DM) einen Ausgang aufweist, der mit einem Eingang der Logikschaltung (LC) verbunden ist, und zwar zum Abgeben eines Detektionssignals (DET) an die Logikschaltung (LC) dann, wenn mehr oder weniger Dateninformationseinheiten als der Nennwert detektiert werden, daß die zugeordnete Erzeugung von mehr oder weniger Schreibadressen für die Frequenzregulierschaltung maskiert wird, und zwar durch einstufiges Ändern der ersten Referenzadresse (a) oder der zweiten Referenzadresse (b) oder der beiden Referenzadressen (a, c) zusammen, um eine solche Zahl von Referenzadressen, die mit der Zahl der mehr oder weniger Dateninformationseinheiten in dem Rahmen übereinstimmt, wonach die veränderte Referenzadresse oder die veränderten Referenzadressen (a, c) in schrittweisen Inkrementen zurück zu dem Startzustand angeglichen werden, während der Schreibsignalpuls (xpls) und der Lesesignalpuls (ypls) mit wechselseitiger Zeitverschiebung erzeugt werden, derart, daß die Zählrate, mit der Leseadressen (RADR) erzeugt werden, in einer solchen Weise verändert wird, daß sie der Änderung der Erzeugung der Schreibadressen (WADR) folgt, die dann auftritt, wenn der ankommende Rahmen mehr oder weniger Dateninformationseinheiten als der Nennwert enthält, und daß die Frequenzregelschaltung (PLL) die Zählrate als Ergebnis der Detektion von mehr Dateneinheiten als dem Nennwert in einem Rahmen erhöht und die Zählrate als Ergebnis der Detektion von weniger Dateninformationseinheiten in dem ankommenden Rahmen als dem Nennwert verringert.

18. Anordnung nach Anspruch 17, **dadurch gekennzeichnet, daß** die Frequenzregelschaltung (PLL) einen PLL-Kreis enthält, mit einem Phasendetektor (PD) zum Detektieren der wechselseitigen Zeitverschiebung des Schreibsignalpulses (xpls) und des Lesesignalpulses (ypls), derart, daß der Phasendetektor (PD) ein Steuersignal (co) abgibt, das von der detektierten Zeitverschiebung abhängt, und ferner einen spannungsgesteuerte Oszillatorschaltung (VCO) enthält, die das Steuersignal (co) empfängt und die Frequenz eines Taktsignals (c1) in Ansprechen auf das empfangene Steuersignal (co) angleicht, und einen Zähler (91), der das Taktsignal (c1) und die Lesesignalpulse (RCLP) an den Leseadreßgenerator (RADRGEN) abgibt, derart, daß die Lesetaktpulse mit einer Frequenz abgegeben werden, die von der wechselseitigen Zeitverschiebung zwischen dem Schreibsignalpuls und dem Lesesignalpuls abhängen, und derart, daß die Zählrate des Leseadreßgenerators mit der Frequenz der Lesetaktpulse variiert.

19. Anordnung nach Anspruch 17, **dadurch gekennzeichnet, daß** die erste und die zweite Vergleichsvorrichtung (KOMP1, KOMP2) Komparatoren sind.

20. Anordnung nach Anspruch 17, **dadurch gekennzeichnet, daß** die Logikschaltung (LC) funktionsgemäß die erste Referenzadresse (a) in eine Vorwärtsrichtung dann ändert, wenn mehr Dateninformationseinheiten bei einem ankommenden Rahmen als der Nennwert für die Einheiten detektiert wird, derart, daß die Referenzadresse in eine Vorwärtsrichtung gemäß so vielen Referenzadressen wie die zusätzliche Zahl der Dateninformationseinheiten oberhalb dem Nennwert geändert wird, und derart, daß die Logikschaltung funktionsgemäß die erste Referenzadresse (a) in einer Rückwärtsrichtung dann ändert, wenn weniger Dateninformationseinheiten detektiert werden, und derart, daß die Referenzadresse in einer Rückwärtsrichtung um soviele Referenzadressen wie die geringere Zahl der Dateninformationseinheiten geändert wird; und daß die Logikschaltung (LC) funktionsgemäß auch die erste Referenzadresse (a) zurück zu dem Startzustand in inkrementellen Schritten so angleicht, daß die Zahl der Schritte und die Zeitperiode zwischen den Schritten von dem Umfang abhängt, gemäß dem die erste Referenzadresseadresse (a) gegenüber dem Starzustand geändert ist, derart, daß die Angleichung mit großen Schritten oder innerhalb kurzen Zeitintervallen zwischen den Schritten dann durchgeführt wird, wenn die Referenzadresse in einem großen Umfang von einem Startzustand abweicht, und daß die in geringen Schritten und mit langen Zeitintervallen zwischen den Schritten dann durchgeführt wird, wenn die Referenzadresse von dem Starzustand lediglich in einem geringen Umfang abweicht.

## Revendications

1. Procédé pour adapter la cadence à laquelle une séquence cyclique d'adresses de lecture (RADR) est appliquée à une mémoire (FIFO), à la cadence à laquelle une séquence cyclique d'adresses d'écriture (WADR) est appliquée à la mémoire, dans lequel la séquence d'adresses d'écriture est appliquée à une cadence qui est changée par intermittence, et dans lequel la cadence à laquelle les adresses de lecture sont appliquées à la mémoire est ajustée de manière que les adresses de lecture soient appliquées à la mémoire, en moyenne, à une cadence égale à celle à laquelle les adresses d'écriture sont appliquées à ladite mémoire, caractérisé en ce que
- on détermine une première grandeur de comparaison (x) à partir des adresses d'écriture, cette première grandeur de comparaison (x) étant liée à la cadence à laquelle les adresses d'écriture sont appliquées à la mémoire,
- on détermine une seconde grandeur de comparaison (y) à partir des adresses de lecture, cette seconde grandeur de comparaison (y) étant liée à la cadence à laquelle les adresses de lecture sont appliquées à la mémoire,
- on déduit un résultat (co) en comparant les première et seconde grandeurs de comparaison,
- on détecte un changement dans la cadence à laquelle les adresses d'écriture sont appliquées à la mémoire,
- on active une redétermination de l'une au moins des grandeurs de comparaison (x, y), de manière que le résultat (co) soit initialement maintenu inchangé, et on réduit successivement l'influence de la redétermination, et
- on ajuste conformément au résultat (co) la cadence à laquelle les adresses de lecture sont appliquées à la mémoire.

2. Procédé selon la revendication 1, dans lequel l'information de données entrante à écrire dans la mémoire à l'aide des adresses d'écriture est divisée en trames, les trames contenant également une autre information qui ne doit pas être écrite dans la mémoire, et la quantité d'information de données qui est contenue dans une trame pouvant coïncider avec une valeur nominale ou s'écarter de celle-ci, caractérisé en ce qu'on détecte si la quantité d'information de données qui est contenue dans une trame coïncide avec la valeur nominale ou s'écarte de celle-ci, pour détecter ainsi le changement de la cadence à laquelle des adresses d'écriture sont appliquées à la mémoire.

3. Procédé selon la revendication 1 ou 2, caractérisé en ce que
- on détermine la première grandeur de comparaison (x) à partir des adresses d'écriture, en formant une première adresse de référence (a) qui correspond à une adresse d'écriture,
- on compare l'adresse d'écriture (WADR) qui est appliquée à la mémoire (FIFO) avec la première adresse de référence, le résultat de cette comparaison formant la première grandeur de comparaison (x),
- on détermine la seconde grandeur de comparaison (y) à partir des adresses de lecture, en formant une seconde adresse de référence (c) qui correspond à une adresse de lecture,
- on compare l'adresse de lecture (RADR) qui est appliquée à la mémoire (FIFO) avec la seconde adresse de référence, le résultat de cette comparaison formant la seconde grandeur de comparaison (y), dans lequel les adresses de référence (a, c) dans un état de départ en l'absence de l'activation précitée, sont établies avec une différence mutuelle qui correspond de façon générale à une différence de phase d'un demi-cycle dans une séquence d'adresses, dans lequel ladite première grandeur de comparaison est constituée par une impulsion de signal d'écriture (xpls) qui est produite lorsque l'adresse d'écriture est égale à la première adresse de référence, et dans lequel ladite seconde grandeur de comparaison est constituée par une impulsion de signal de lecture (ypls) qui est produite lorsque l'adresse de lecture est égale à la seconde adresse de référence, grâce à quoi les impulsions (xpls, ypls) sont produites simultanément lorsque le déphasage entre les adresses de lecture et les adresses d'écriture simultanées correspond au déphasage entre les adresses de référence, tandis que les impulsions sont produites avec un décalage temporel lorsque les déphasages entre des adresses de lecture appliquées et les adresses d'écriture simultanées diffèrent du déphasage entre les première et seconde adresses de référence.

4. Procédé selon la revendication 3, caractérisé en ce que la comparaison entre les première et seconde grandeurs de comparaison (x, y) est effectuée en comparant les instants auxquels les impulsions de signal d'écriture et les impulsions de signal de lecture (xpls, ypls) sont produites, et en ajustant la cadence à laquelle de nouvelles adresses de lecture (RADR) sont appliquées à la mémoire (FIFO) conformément au résultat (co) de la comparaison, dans lequel la cadence est augmentée lorsque l'impulsion de signal d'écriture (xpls) est produite avant l'impulsion de signal de lecture (ypls), la cadence est diminuée lorsque l'impulsion de signal d'écriture est produite après l'impulsion de signal de lecture, et la cadence est maintenue inchangée lorsque l'impulsion de signal d'écriture et l'impulsion de signal de lecture sont produites de façon mutuellement simultanée.

5. Procédé selon la revendication 3, caractérisé en ce que l'activation de la redétermination de l'une au moins des grandeurs de comparaison en association avec un changement dans la cadence à laquelle les adresses d'écriture sont appliquées à la mémoire, est effectuée initialement en changeant la première adresse de référence (a) ou la seconde adresse de référence (c) ou les deux adresses de référence ensemble (a, c), dans une mesure qui correspond au changement précité; et en ce que l'activation de ladite redétermination est réduite successivement en ajustant l'adresse de référence ou les adresses de référence changées, de façon incrémentielle, par pas ramenant à l'état de départ, pendant que l'impulsion de signal d'écriture (xpls) et l'impulsion de signal de lecture (ypls) sont produites avec un décalage temporel, de façon que la cadence à laquelle des adresses de lecture sont appliquées à la mémoire soit ajustée pour suivre la cadence changée à laquelle des adresses d'écriture sont appliquées à la mémoire.

6. Dispositif pour adapter la cadence à laquelle une séquence cyclique d'adresses de lecture (RADR) est appliquée à une mémoire (FIFO), à la cadence à laquelle une séquence cyclique d'adresses d'écriture (WADR) est appliquée à ladite mémoire, ladite séquence d'adresses d'écriture étant appliquée à une cadence qui est changée par intermittence, le dispositif comprenant des moyens de commande (PLL) pour ajuster la cadence à laquelle les adresses de lecture sont appliquées à la mémoire, de façon que les adresses de lecture, en moyenne, soient appliquées à la mémoire à la cadence à laquelle les adresses d'écriture sont appliquées à la mémoire, caractérisé par
- des premiers moyens de détermination (KOMP1) pour déterminer une première grandeur de comparaison (x) à partir des adresses d'écriture, cette première grandeur de comparaison (x) étant liée à la cadence à laquelle les adresses d'écriture sont appliquées à la mémoire,
- des seconds moyens de détermination (KOMP2) pour déterminer une seconde grandeur de comparaison (y) à partir des adresses de lecture, cette seconde grandeur de comparaison (y) étant liée à la cadence à laquelle les adresses de lecture sont appliquées à la mémoire,
- des premiers moyens de comparaison (PD) pour déduire un résultat (co) en comparant les première et seconde grandeurs de comparaison,
- des moyens de détection (DM) pour détecter un changement dans la cadence à laquelle les adresses d'écriture sont appliquées à la mémoire,
- des moyens d'activation (LC) pour activer une redétermination de l'une au moins des grandeurs de comparaison (x, y), d'une manière telle que le résultat (co) soit initialement maintenu inchangé, et pour réduire successivement l'influence de la redétermination, et
- des moyens de commande (PLL) pour ajuster, conformément au résultat (co), la cadence à laquelle les adresses de lecture sont appliquées à la mémoire.

7. Dispositif selon la revendication 6, dans lequel l'information de données à écrire dans la mémoire à l'aide des adresses d'écriture apparaît en étant divisée en trames, les trames contenant également une autre information qui ne doit pas être écrite dans la mémoire, caractérisé en ce que les moyens de détection (DM) sont conçus pour détecter le changement de la cadence à laquelle des adresses d'écriture sont appliquées à la mémoire, en détectant si la quantité d'information de données dans une trame coïncide avec la valeur nominale ou s'écarte de cette valeur.

8. Dispositif selon la revendication 6 ou 7, caractérisé en ce que les premiers moyens de détermination (KOMP1) comprennent un premier comparateur auquel une première adresse de référence (a) est appliquée et auquel sont également appliquées des adresses d'écriture (WADR) identiques à celles qui sont appliquées à la mémoire (FIFO), ce comparateur étant destiné à comparer la première adresse de référence qui lui est appliquée avec les adresses d'écriture qui lui sont appliquées, et à fournir la première grandeur de comparaison (x), sous la forme d'un signal d'impulsion d'écriture (xpls) lorsque l'adresse de référence et les adresses d'écriture sont trouvées similaires; en ce que les seconds moyens de détermination (KOMP2) comprennent un second comparateur auquel sont appliquées une seconde adresse de référence (c) et des adresses de lecture (RADR) identiques à celles qui sont appliquées à la mémoire (FIFO), ce second comparateur fonctionnant de façon à comparer la seconde adresse de référence qui lui est appliquée avec les adresses de lecture qui lui sont appliquées, et à fournir la seconde grandeur de comparaison (y), sous la forme d'une impulsion de signal de lecture (ypls) lorsque la seconde adresse de référence et les adresses de lecture sont trouvées similaires.

9. Dispositif selon la revendication 8, caractérisé en ce que les premiers moyens de comparaison comprennent un détecteur de phase (PD) qui reçoit l'impulsion de signal d'écriture (xpls) sur une première entrée et qui reçoit l'impulsion de signal de lecture (ypls) sur une seconde entrée, ce détecteur de phase fonctionnant de façon à détecter tout décalage temporel entre une impulsion de signal d'écriture et une impulsion de signal de lecture correspondante, et à fournir sur une sortie un signal de commande (co) qui dépend d'un décalage temporel détecté ; en ce que les moyens de commande (PLL) comprennent un oscillateur commandé par tension (VCO) qui reçoit le signal de commande (co) sur une entrée et qui fournit sur une sortie un signal ayant une fréquence (f) qui détermine la cadence à laquelle des adresses de lecture sont appliquées à la mémoire; en ce que l'oscillateur commandé par tension (VCO) fonctionne de façon à augmenter la cadence à laquelle de nouvelles adresses de lecture sont appliquées à la mémoire (FIFO) lorsque les impulsions de signal d'écriture sont produites avant les impulsions de signal de lecture correspondantes; en ce que l'oscillateur est prévu pour réduire la cadence lorsque les impulsions de signal d'écriture sont produites après des impulsions de signal de lecture correspondantes; et en ce que l'oscillateur est prévu pour maintenir la cadence inchangée lorsque des impulsions de signal d'écriture et des impulsions de signal de lecture correspondantes sont produites exactement au même instant.

10. Dispositif selon la revendication 8, caractérisé en ce que les moyens d'activation (LC) comprennent un circuit logique qui, au moment de la détection d'un changement dans la cadence à laquelle les adresses d'écriture sont appliquées, fonctionne de façon à compenser ce changement; en ce que le circuit logique est connecté au premier comparateur (KOMP1) et il est constitué de façon à effectuer un changement dans la première adresse de référence (a) correspondant audit changement dans la cadence à laquelle les adresses d'écriture sont appliquées, de façon à compenser initialement la totalité de ce changement; et en ce que le circuit logique est constitué de façon à supprimer le changement dans l'adresse de référence (a) par pas incrémentiels, de façon que la compensation soit réduite successivement et cesse.

11. Procédé pour émettre de l'information de données à partir d'un système hiérarchique numérique synchrone (SDH) vers un système hiérarchique numérique plésiochrone (PDH), cette information de données (DATAINFOᵢₙ) apparaissant répartie dans des trames dans le système synchrone, les trames comprenant des unités d'information de données (DATAINFOᵢₙ) à émettre vers le système PDH, et également des unités d'autre information qui ne doivent pas être émises vers le système PDH, la relation entre le nombre d'unités d'information de données et le nombre d'autres unités d'information pouvant varier dans chaque trame, selon que la trame contient un nombre nominal d'unités d'information de données ou plus d'unités d'information de données que le nombre nominal, ou moins d'unités d'information de données que le nombre nominal, et le procédé comprenant les étapes qui consistent à écrire l'information de données (DATAINFOᵢₙ) provenant du système synchrone dans une mémoire adressable (FIFO) et à lire l'information de données (DATAINFOₒᵤₜ) dans la mémoire adressable pour la diriger vers le système plésiochrone, et dans ce procédé, une séquence cyclique d'adresses d'écriture (WADR) est générée en succession d'une manière telle qu'une adresse d'écriture soit générée pour chaque unité d'information de données (DATAINFOᵢₙ) à émettre vers le système PDH, tandis que la génération d'adresses d'écriture est interrompue pour chaque unité d'autre information, grâce à quoi un nombre nominal d'adresses d'écriture sont générées pour chaque trame lorsqu'une trame ayant un nombre nominal d'unités d'information de données apparaît dans le système synchrone, et des adresses d'écriture en un nombre supérieur au nombre nominal d'adresses sont générées pour chaque trame lorsque la trame qui apparaît contient plus d'unités d'information de données que ledit nombre nominal, et des adresses d'écriture en un nombre inférieur au nombre nominal d'adresses sont générées pour chaque trame lorsque la trame qui apparaît contient moins d'unités d'information de données que le nombre nominal, dans lequel l'information de données (DATAINFOᵢₙ) provenant du système synchrone est écrite dans des positions de mémoire dans la mémoire qui sont indiquées par les adresses d'écriture, dans lequel une séquence cyclique d'adresses de lecture (RADR) sont générées, dans lequel des adresses de mémoire identiques aux adresses de mémoire qui sont incluses dans la séquence cyclique d'adresses d'écriture, sont incluses dans la séquence d'adresses de lecture, et dans le même ordre que les adresses de mémoire, dans lequel l'information de données (DATAINFOₒᵤₜ) est lue et est dirigée vers le système plésiochrone à partir de positions de mémoire dans la mémoire qui sont indiquées par les adresses de lecture (RADR), dans lequel dans un état de départ, les adresses de lecture sont générées en étant déphasées de manière générale de la moitié d'un cycle d'adresse par rapport aux adresses d'écriture qui sont générées simultanément, de façon que des données ne soient pas écrites et lues dans la mémoire de façon simultanée à partir d'une seule et même position de mémoire, et dans ce procédé, les adresses de lecture sont générées, en moyenne, à la même cadence que les adresses d'écriture, caractérisé en ce que
- on établit une première adresse de référence (a) qui correspond à une adresse d'écriture, et on établit une seconde adresse de référence (c) qui correspond à une adresse de lecture, de façon que le déphasage mutuel dans les adresses de référence (a, c) corresponde fondamentalement à la moitié d'un cycle d'écriture dans un état de départ;
- on produit une impulsion de signal d'écriture (xpls) lorsque l'adresse d'écriture (WADR) est égale à la première adresse de référence (a), et on produit une impulsion de signal de lecture (ypls) lorsque l'adresse de lecture (RADR) est égale à la seconde adresse de référence (c), grâce à quoi ces impulsions (xpls, ypls) sont produites de façon mutuellement simultanée lorsque le déphasage entre les adresses de lecture et les adresses d'écriture correspond au déphasage mutuel des adresses de référence, tandis que ces impulsions (xpls, ypls) sont produites avec un décalage temporel lorsque le déphasage entre les adresses de lecture et les adresses d'écriture diffère du déphasage entre les adresses de référence,
- on applique ces impulsions (xpls, ypls) à un circuit de régulation de fréquence (PLL) qui fonctionne de façon à ajuster la cadence à laquelle de nouvelles adresses de lecture (RADR) sont produites, cette cadence étant changée lorsque l'impulsion de signal d'écriture (xpls) et l'impulsion de signal de lecture (ypls) correspondante sont produites avec un décalage temporel mutuel, et cette cadence étant inchangée lorsque l'impulsion de signal d'écriture (xpls) est produite en même temps que l'impulsion de signal de lecture (ypls);
- on détecte le moment auquel une trame qui apparaît contient plus ou moins d'unités d'information de données (DATAINFOᵢₙ) que le nombre nominal;
- lorsqu'on détecte qu'une trame contient plus ou moins d'unités d'information de données que le nombre nominal, on masque la génération correspondante de plus ou moins d'adresses d'écriture (WADR) pour cette trame, en changeant la première adresse de référence (a) ou la seconde adresse de référence (c) ou les deux adresses de référence ensemble (a, c), d'autant d'adresses de référence que le nombre auquel correspondent les unités d'information en plus ou en moins;
- on ajuste pas à pas pour retourner audit état de départ l'adresse de référence ou les adresses de référence changées (a, c), l'impulsion de signal d'écriture (xpls) et l'impulsion de signal de lecture (ypls) étant produites avec un décalage temporel mutuel, de façon que la cadence à laquelle des adresses de lecture (RADR) sont générées soit changée pour suivre le changement du nombre d'adresses d'écriture (WADR) qui sont générées pour chaque trame qui apparaît avec plus ou moins d'unités d'information de données que le nombre nominal dans une trame, cette cadence augmentant lorsque la trame contient plus d'unités d'information et diminuant lorsque la trame contient moins d'unités d'information que le nombre nominal pour la trame.

12. Procédé selon la revendication 11, caractérisé en ce que lorsqu'on détecte plus d'unités d'information de données que le nombre nominal, on détecte également qu'un ou plusieurs espaces (H3) dans la trame, prévus pour transmettre plus d'unités d'information de données que le nombre nominal, contiennent de l'information de données, et lorsqu'on détecte moins d'unités d'information de données que le nombre nominal, on détecte qu'un ou plusieurs autres espaces (0) dans la trame ne contiennent pas d'information de données et ne sont pas utilisés pour l'information de données au moment de la transmission de moins d'unités d'information de données que le nombre nominal.

13. Procédé selon la revendication 11, caractérisé en ce que lorsque la trame entrante contient moins d'unités d'information de données (DATAINFOᵢₙ) que le nombre nominal, la génération correspondante de plus d'adresses d'écriture est masquée en changeant la première adresse de référence (a) en avant, d'autant d'adresses de référence que le nombre d'unités d'information de données en plus qui sont contenues dans la trame au-delà du nombre nominal, et lorsque la trame entrante contient moins d'unités d'information de données (DATAINFOᵢₙ) que le nombre nominal, la génération correspondante de moins d'adresses d'écriture est masquée en changeant la première adresse de référence (a) en arrière, d'autant d'adresses de référence que le nombre d'unités d'information de données en moins qui sont contenues dans la trame, par rapport au nombre nominal.

14. Procédé selon la revendication 13, caractérisé en ce que le masquage est effectué en un seul pas.

15. Procédé selon la revendication 13, caractérisé par l'ajustement de la première adresse de référence (a) en arrière, vers l'état de départ, après l'accomplissement de ladite opération de masquage, dans lequel
- on mesure l'écart de la première adresse de référence (a) par rapport à l'état de départ; et
- on ajuste la première adresse de référence (a) en arrière, vers l'état de départ, par pas incrémentiels, à une cadence qui devient plus élevée en présence d'écarts croissants de la première adresse de référence par rapport à l'état de départ.

16. Procédé selon la revendication 15, caractérisé en ce que l'ajustement pas à pas de la première adresse de référence (a) pour retourner à l'état de départ est effectué par parties d'adresses de référence.

17. Dispositif pour émettre de l'information de données à partir d'un système hiérarchique numérique synchrone (SDH) vers un système hiérarchique numérique plésiochrone (PDH), cette information de données (DATAINFOᵢₙ) apparaissant en étant répartie dans des trames dans le système synchrone, dans lequel les trames comprennent des unités d'information de données (DATAINFOᵢₙ) à émettre vers le système PDH, et également des unités d'autre information qui ne doivent pas être émises vers le système PDH, dans lequel la relation entre le nombre d'unités d'information de données et le nombre d'autres unités d'information dans chaque trame peut varier, selon que la trame contient un nombre nominal d'unités d'information de données ou plus d'unités d'information de données que le nombre nominal, ou moins d'unités d'information de données que le nombre nominal, et dans ce dispositif, l'information de données (DATAINFOᵢₙ) provenant du système synchrone est écrite dans la mémoire adressable (FIFO) et l'information de données (DATAINFOₒᵤₜ) est lue et émise vers le système plésiochrone à partir de la mémoire adressable, et ce dispositif comprenant un générateur d'adresses d'écriture (WADRGEN) pour générer une séquence cyclique d'adresses d'écriture (WADR), de façon à générer une adresse d'écriture pour chaque unité d'information de données (DATAINFOᵢₙ) à émettre vers le système PDH, tandis que la génération d'adresses d'écriture est interrompue pour chaque unité d'autre information, grâce à quoi un nombre nominal d'adresses d'écriture est généré pour chaque trame lorsqu'une trame ayant un nombre nominal d'unités d'information de données apparaît dans le système synchrone, et plus d'adresses d'écriture que le nombre nominal d'adresses sont générées pour chaque trame lorsque la trame qui apparaît contient plus d'unités d'information de données que ledit nombre nominal, et moins d'adresses d'écriture que le nombre nominal d'adresses sont générées pour chaque trame lorsque la trame qui apparaît contient moins d'unités d'information de données que le nombre nominal, dans lequel l'information de données (DATAINFOᵢₙ) qui provient du système synchrone est écrite dans des positions de mémoire dans la mémoire qui sont indiquées par les adresses d'écriture, dans lequel la structure comprend en outre un générateur d'adresse de lecture (RADRGEN) pour générer une séquence cyclique d'adresses de lecture (RADR), dans lequel des adresses de mémoire identiques aux adresses de mémoire qui sont incluses dans la séquence cyclique d'adresses d'écriture sont incluses dans la séquence d'adresses de lecture, et dans le même ordre que lesdites adresses de mémoire, dans lequel l'information de données (DATAINFOₒᵤₜ) est lue et émise vers le système plésiochrone à partir de positions de mémoire dans la mémoire qui sont indiquées par les adresses de lecture (RADR), dans lequel dans un état de départ, les adresses de lecture sont générées en étant de manière générale déphasées de la moitié d'un cycle d'adresse par rapport aux adresses d'écriture qui sont générées simultanément, de façon que des données ne soient pas écrites et lues simultanément dans la mémoire à une seule et même position de mémoire, et dans ce dispositif, les adresses de lecture sont générées, en moyenne, à la même cadence que les adresses d'écriture, caractérisé en ce que le dispositif comprend également
- des premiers moyens de comparaison (KOMP1) pour effectuer une comparaison entre une première adresse de référence (a) et des adresses d'écriture (WADR) qui sont générées, une première impulsion de signal d'écriture (xpls) étant fournie sur une sortie lorsque l'adresse d'écriture est la même que la première adresse de référence;
- des seconds moyens de comparaison (KOMP2) pour effectuer une comparaison entre une seconde adresse de référence (c) et des adresses de lecture (RADR) qui sont générées, une impulsion de signal de lecture (ypls) étant fournie sur une sortie lorsque l'adresse de lecture est la même que la seconde adresse de référence;
- un circuit de régulation de fréquence (PLL), ayant une sortie connectée audit générateur d'adresse de lecture (RADRGEN) pour ajuster la cadence de comptage à laquelle des adresses de lecture sont générées, qui reçoit l'impulsion de signal d'écriture (xpls) sur une première entrée et l'impulsion de signal de lecture (ypls) sur une seconde entrée, la cadence de compteur étant ajustée lorsque l'impulsion de signal d'écriture (xpls) et l'impulsion de signal de lecture (ypls) sont reçues avec un décalage temporel mutuel, tandis que la cadence de comptage reste inchangée lorsque l'impulsion de signal d'écriture et l'impulsion de signal de lecture sont reçues simultanément;
- un circuit logique (LC) qui est couplé de façon à commander la première adresse de référence (a) ou est couplé de façon à commander la seconde adresse de référence (c) ou est couplé de façon à commander simultanément à la fois la première adresse de référence (a) et la seconde adresse de référence (c), dans lequel les adresses de référence dans un état de départ ont un déphasage mutuel qui correspond à la moitié d'un cycle d'adresse, dans lequel le signal d'impulsion d'écriture (xpls) et le signal d'impulsion de lecture (ypls) sont fournis simultanément lorsque le déphasage entre des adresses d'écriture qui sont générées et des adresses de lecture qui sont générées simultanément correspond au déphasage entre lesdites première et seconde adresses de référence;
- un circuit de détection (DM) pour détecter plus ou moins d'unités d'information de données (DATAINFOᵢₙ) que le nombre nominal d'unités d'information de données dans une trame entrante, dans lequel le circuit de détection (DM) a une sortie connectée à une entrée du circuit logique (LC) pour appliquer un signal de détection (DET) au circuit logique (LC) au moment de la détection de plus ou moins d'unités d'information de données que le nombre nominal, dans lequel la génération correspondante de plus ou moins d'adresses d'écriture est masquée pour le circuit de régulation de fréquence, en changeant en un seul pas la première adresse de référence (a) ou la seconde adresse de référence (c) ou les deux adresses de référence (a, c) ensemble, d'un nombre d'adresses de référence qui correspond au nombre d'unités d'information de données en plus ou en moins dans ladite trame, après quoi l'adresse de référence ou les adresses de référence (a, c) changées sont ajustées pas à pas par incréments pour retourner à l'état de départ, pendant que l'impulsion de signal d'écriture (xpls) et l'impulsion de signal de lecture (ypls) sont produites en étant mutuellement décalées dans le temps, de façon que la cadence de comptage à laquelle des adresses de lecture (RADR) sont produites soit changée de manière à suivre le changement dans la génération d'adresses d'écriture (WADR) qui se produit lorsque la trame entrante contient plus ou moins d'unités d'information de données que le nombre nominal, et dans lequel le circuit de régulation de fréquence (PLL) augmente la cadence de compteur sous l'effet de la détection de plus d'unités d'information de données que le nombre nominal dans une trame, et il diminue la cadence de comptage sous l'effet de la détection de moins d'unités d'information de données que le nombre nominal dans la trame entrante.

18. Dispositif selon la revendication 17, caractérisé en ce que le circuit de régulation de fréquence (PLL) comprend un circuit d'asservissement de phase ayant un détecteur de phase (PD) pour détecter le décalage temporel mutuel de l'impulsion de signal d'écriture (xpls) et de l'impulsion de signal de lecture (ypls), dans lequel le détecteur de phase (PD) fournit un signal de commande (co) qui dépend du décalage temporel détecté, et comprend en outre un circuit oscillateur commandé par tension (VCO) qui reçoit le signal de commande (co) et qui ajuste la fréquence d'un signal d'horloge (cl) en réponse au signal de commande reçu (co), et un compteur (91) qui reçoit le signal d'horloge (cl) et qui applique des impulsions d'horloge de lecture (RCLP) au générateur d'adresses de lecture (RADRGEN), dans lequel les impulsions d'horloge de lecture sont appliquées à une fréquence qui dépend du décalage temporel mutuel entre l'impulsion de signal d'écriture et l'impulsion de signal de lecture, et dans lequel la cadence de comptage dans le générateur d'adresses de lecture varie avec la fréquence des impulsions d'horloge de lecture.

19. Dispositif selon la revendication 17, caractérisé en ce que les premiers et seconds moyens de comparaison (KOMP1, KOMP2) sont des comparateurs.

20. Dispositif selon la revendication 17, caractérisé en ce que le circuit logique (LC) fonctionne de façon à changer la première adresse de référence (a) en un sens avant au moment de la détection de plus d'unités d'information de données dans une trame entrante que le nombre nominal desdites unités, dans lequel l'adresse de référence est changée dans un sens avant d'autant d'adresses de référence que le nombre d'unités d'information de données en plus au-dessus du nombre nominal, et dans lequel le circuit logique fonctionne de façon à changer la première adresse de référence (a) en un sens arrière au moment de la détection de moins d'unités d'information de données, et dans lequel l'adresse de référence est changée en un sens arrière d'autant d'adresses de référence que le nombre d'unités d'information de données en moins; et en ce que le circuit logique (LC) fonctionne également de façon à ajuster la première adresse de référence (a) pour retourner à l'état de départ, par pas incrémentiels, de façon que le nombre de pas et l'intervalle de temps entre ces pas dépendent de la mesure dans laquelle la première adresse de référence (a) a été changée à partir dudit état de départ, dans lequel l'ajustement est effectué avec de grands pas ou à de courts intervalles de temps entre les pas lorsque l'adresse de référence s'écarte dans une large mesure dudit état de départ, et il est effectué avec de petits pas et de longs intervalles de temps entre lesdits pas lorsque l'adresse de référence s'écarte seulement dans une faible mesure dudit état de départ.
